(19) Europäisches Patentamt / European Patent Office / Office européen des brevets

(11) **EP 3 291 912 B1**

(12) **EUROPÄISCHE PATENTSCHRIFT**

(45) Veröffentlichungstag und Bekanntmachung des Hinweises auf die Patenterteilung:
**05.06.2019 Patentblatt 2019/23**

(21) Anmeldenummer: **16723929.2**

(22) Anmeldetag: **01.04.2016**

(51) Int Cl.:
**B01D 69/02** *(2006.01)*  **B01D 69/10** *(2006.01)*
**B01D 69/12** *(2006.01)*

(86) Internationale Anmeldenummer:
**PCT/DE2016/000141**

(87) Internationale Veröffentlichungsnummer:
**WO 2016/177355 (10.11.2016 Gazette 2016/45)**

(54) **KOHLENSTOFFHALTIGE MEMBRANE FÜR DIE WASSER- UND GASTRENNUNG**

CARBON-CONTAINING MEMBRANE FOR WATER AND GAS SEPARATION

MEMBRANE CARBONÉE POUR LA SÉPARATION D'EAU ET DE GAZ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.05.2015 DE 102015005732**

(43) Veröffentlichungstag der Anmeldung:
**14.03.2018 Patentblatt 2018/11**

(73) Patentinhaber: **Forschungszentrum Jülich GmbH 52425 Jülich (DE)**

(72) Erfinder:
• **VAN GESTEL, Tim 52428 Jülich (DE)**
• **GUILLON, Olivier 52428 Jülich (DE)**

(56) Entgegenhaltungen:
**WO-A1-2009/117978     WO-A1-2014/004514
US-A1- 2011 148 248**

• **HUANG HUA ET AL: "Facile one-step forming of NiO and yttrium-stabilized zirconia composite anodes with straight open pores for planar solid oxide fuel cell using phase-inversion tape casting method", JOURNAL OF POWER SOURCES, ELSEVIER SA, CH, Bd. 274, 31. Oktober 2014 (2014-10-31), Seiten 1114-1117, XP029104450, ISSN: 0378-7753, DOI: 10.1016/J.JPOWSOUR.2014.10.190**

EP 3 291 912 B1

**Beschreibung**

Die Erfindung betrifft eine kohlenstoffhaltige Membrane, insbesondere eine Membrane umfassend Graphitoxid oder Graphit, die besonders für die Wasser- oder Gastrennung eingesetzt werden kann.

Stand der Technik

Trennmembranen können prinzipiell als poröse oder nicht poröse Schichten vorliegen. Bei den Trennmembranen unterscheidet man zwischen homogenen und asymmetrischen Membranen. Dabei sind homogene Membranen in der Regel sehr dünn ausgestaltet, um eine möglichst hohe Permeabilität pro Fläche aufzuweisen. Jedoch ist bei diesen dünnen Membranen die mechanische Stabilität häufig nicht ausreichend. Bei den asymmetrischen Membranen ist demgegenüber auf einer mechanisch stabilen porösen Unterstruktur mit hoher Permeabilität eine sehr dünne Trennschicht angeordnet.

Trennprozesse können nach den daran beteiligten Phasen (Fest, Flüssig, Gas) eingeteilt werden und finden in der industriellen Anwendung weite Verbreitung. Immer häufiger werden Membranprozesse auch als Alternative zu herkömmlichen Trennverfahren, wie beispielsweise die Destillation, die Kristallisation, die kryogene Trennung, die Adsorption oder auch die Extraktion, in Betracht gezogen. Allerdings wird der Einsatz durch den bisherigen Mangel an geeigneten Membranen, die einerseits die notwendigen Trenneigenschaften aufweisen und gleichzeitig harschen Betriebsbedingungen (hohe Temperaturen, hohe Drücke, Wasserdampf, korrosive Gase, aggressive Flüssigkeiten) standhalten, nachteilig begrenzt.

Die bisher in Trennprozessen kommerziell eingesetzten Membranen umfassen in der Regel ein Polymermaterial, welches bezüglich der mangelnden mechanischen, thermischen und chemischen Stabilität, gewisse Nachteile aufweist, und daher nur begrenzt einsetzbar ist.

Auf der anderen Seite sind bereits keramische mikroporöse Membranen bekannt, die eine Funktionsschicht aus Zeolith, Silica ($SiO_2$) oder Kohlenstoff aufweisen, sowie die so genannten hybriden $SiO_2$ Membranen, welche neben $SiO_2$ auch Kohlenstoffatome aufweisen. Diese Membrane werden als Alternative zu Polymermembranen vorgeschlagen. Sie sind in einem weiteren Anwendungsbereich einsetzbar und weisen zudem eine deutlich höhere Lebensdauer auf. Sie sind häufig beständig gegenüber den meisten organischen Lösungsmitteln und regelmäßig temperaturstabil bis zu ca. 300 °C bei hybriden Membranen und ggfs. auch bis zu noch höheren Temperaturen.

Insbesondere Zeolith-Membranen sind sowohl im Versuchsmaßstab als auch großtechnisch für den Einsatz bei Trennprozessen von Lösungsmittel, z. B. in der Flüssigphase (Pervaporation (PV)) oder in der Dampfphase (Dampfpermeation, engl. Vapour Permeation (VP)), geeignet. Einige dieser Membranen zeigen eine extrem enge Porengrößenverteilung um ca. 0,5 nm auf, und sind insbesondere geeignet, um Wasser aus allen Arten von organischen Lösungsmitteln abzutrennen.

Mikroporöse amorphe $SiO_2$-Membranen sind bereits seit mehr als 20 Jahren bekannt. Diese Membranen weisen in der Regel eine mikroporöse $SiO_2$-Membranschicht mit einer Porengröße < 0,5 nm auf, die über ein Sol-Gel-Prozess auf einen mesoporösen, $\gamma$-$Al_2O_3$ aufweisenden Träger aufgebracht wird. Seit ihrem Erscheinen haben diese Membranen steigendes Interesse hervorgerufen, da sie sowohl für die Wasser- als auch für die Gastrennung ausreichend gute Trenneigenschaften aufweisen.

Eine der charakteristischen Eigenschaften solcher mikroporöser keramischer Gas-Trennmembranen ist der thermisch aktivierte Gastransport. Es wurde herausgefunden, dass für hochqualitative Membranen, der Gasfluss J (engl. flux) durch das mikroporöse Material als Funktion der Temperatur gemäß der Arrheniusgleichung steigt:

$$J = J_0 \exp\left(-E_{act} / RT\right)$$

mit J = Gasfluss (mol m$^{-2}$ s$^{-1}$), $J_0$ = temperaturunabhängiger Koeffizient (mol m$^{-2}$ s$^{-1}$), R = Gaskonstante (J mol$^{-1}$ K$^{-1}$), T = Temperatur (K) und $E_{act}$ = Aktivierungsenergie (kJ mol$^{-1}$).

Die Ermittlung von Aktivierungsenergien für den Gastransport in Zeolith-Trennmembranen und amorphen $SiO_2$-Trennmembranen hat gezeigt, dass es einem Zusammenhang zwischen der Aktivierungsenergie für die Diffusion und der Porengröße und die Qualität der Trennmembrane gibt. Im Allgemeinen ist die Aktivierungsenergie bei kleinen Poren größer als bei großen Poren. Ferner steigt die Aktivierungsenergie für eine bestimmte Trennmembrane mit dessen Qualität. Eine Membran von hoher Qualität wird dabei betrachtet als eine Membrane ohne Risse oder andere Defekte (z. B. große Poren) und mit einer engen Porengrößenverteilung. Bei hochwertigen mikroporösen keramischen Membranen liegt der $E_{act}$ Wert für die diffundierende Gase, wie beispielsweise He oder $H_2$, allgemein über 10 kJ mol$^{-1}$.

Zudem wurde herausgefunden, dass Trennmembranen mit einer hohen Aktivierungsenergie für die Diffusion für die kleinsten Gasmoleküle, wie beispielsweise He oder $H_2$, Molekularsiebeigenschaften aufweisen, d. h. die Permeation steigt mit abnehmender Größe der Gasmoleküle, also $N_2$ < $CO_2$ < $H_2$ < He. Damit weisen solche Trennmembranen regelmäßig eine hohe Gas-Selektivität auf für die kleinsten Gasmoleküle (He, $H_2$).

Sowohl die Zeolith-Membranen als auch die amorphe $SiO_2$-basierte Membranen, die als mögliche Alternativen zu Polymermembranen angedacht waren, weisen jedoch den Nachteil auf, dass sie nur begrenzt widerstandsfähig gegenüber sauren und alkalischen Lösungen sind. Zudem hat sich herausgestellt, dass eine Anzahl von Zeolith-Membranen und insbesondere die klassischen amorphen $SiO_2$ Membranen nicht langzeitbeständig sind gegenüber hydrothermalen Bedingungen.

In der Praxis ist der Einsatz von amorphen $SiO_2$-Membranen durch die besondere Empfindlichkeit des Materials gegenüber Wasser regelmäßig auf trockene Anwendungen begrenzt. Um die Materialstabilität zu vergrößern wurde eine Vielzahl von modifizierten $SiO_2$-Membranen hergestellt. Diese Membranen wurden ebenfalls über ein Sol-Gel-Prozess auf einen mesoporösen $\gamma$-$Al_2O_3$ aufweisenden Träger aufgebracht.

Diese umfassten beispielsweise neben amorphem $SiO_2$ auch Oxide, wie z. B. $ZrO_2$, oder $TiO_2$, oder Metalle, wie z. B. Ni oder Co, als zweite Komponente. Allerdings konnten auch dadurch keine geeigneten Membranen mit einer ausreichenden Stabilität und geeigneten Porengrößenverteilung für die Wasser- oder Gastrennung erhalten werden.

Inzwischen sind auch hybride kohlenstoffhaltige $SiO_2$ Membranen, mit einer verbesserten Widerstandsfähigkeit gegenüber flüssiges Wasser und Wasserdampf bei Temperaturen bis 150°C bekannt (Hybsi©). Wegen des teilweisen $SiO_2$ Charakters dieser Membrane, ist in der Praxis der Anwendungsbereich in Wasser allerdings ebenfalls limitiert. Darüber hinaus ist auch die thermische Stabilität bis maximal 300 °C limitiert, was die Anwendungsmöglichkeiten in der Gastrennung begrenzt. Solche Membranen sind regelmäßig auch nicht in der Lage, die kleinsten Gasmoleküle (He, $H_2$) von anderen Gasmolekülen (z. B. $CO_2$, $N_2$, $CH_4$) mittels eines Molekularsiebprozesses zu trennen, da die Porengröße typischerweise 0,5 nm überschreitet.

In letzter Zeit haben Graphen und Graphenoxid enorme Beachtung als mögliches Membranmaterial erfahren. Graphen und Graphenoxid können dabei als eine Membrane betrachtet werden, die streng genommen nur eine Atomlage dick ausgestaltet ist. Damit stellen sie die dünnsten, künstlich hergestellten Membranen überhaupt dar.

Unter Graphen versteht man eine 2-dimensionale, einlagige Kohlenstofflage aus $sp^2$-hybridisiertem Kohlenstoff, in der die Kohlenstoffatome in einer Honigwabenstruktur angeordnet sind. Graphenoxid stellt die entsprechend funktionalisierte Form von Graphen dar, bei der sauerstoffhaltige Gruppen, wie z. B. Hydroxyl-, Epoxid-, Carbonyl-, Carboxyl-, Lactone- und Chinone-, sowohl an den Rändern als auch in der Ebene angelagert sind. Graphenoxid weist sowohl $sp^2$- als auch $sp^3$-hybridisierten Kohlenstoff auf.

Es wurde vermutet, dass Graphen und Graphenoxidschichten sowohl für Flüssigkeiten als auch für Gase, einschließlich des kleinsten Gasmoleküls Helium, nicht permeabel seien. Um zu einer permeablen Membrane zu gelangen wurde daher vorgeschlagen, eine solche Membrane mit kleinen Durchbrüchen zu versehen, die beispielsweise durch Ätzprozesse erfolgen können.

Bereits in 2013 wurde von Lockheed Martin eine perforierte Membrane, Perforene™, vorgestellt, die nur einer 1-Atomlage dick ausgestaltet ist, aus einer Graphenschicht besteht und Löcher mit einem Durchmesser von ca. 1 nm aufweist. Als Vorteile dieser Membrane werden genannt:

 a) Sie ist beständig gegen hohe pH Werte, aggressive Reinigungsmittel;
 b) Sie ist bei hohen Temperaturen einsetzbar;
 c) Sie weist eine gute Trennwirkung auf;
 d) Sie weist einen verbesserten Durchfluss von Wasser auf und ist dadurch Energie einsparend;
 e) Sie ist elektrisch leitfähig und hydrophob, wodurch sich eine abnehmende Neigung zur Verstopfung in realen Anwendungen ergibt.

Allerdings sind bis jetzt noch keine Methoden bekannt, um die Porenbildung exakt zu kontrollieren. Andere technologische Herausforderungen sind z. B. die großtechnische Fertigung solcher Membranen und deren Robustheit.

Alternativ wurde auch bereits vorgeschlagen, einige Graphen- oder Graphenoxidlagen zu stapeln, um zu sogenanntem wenig lagigem Graphen oder Graphenoxid zu gelangen. Sofern die Lagen kompakt und dicht gestapelt werden, bilden sich laterale Nanokanäle aus, die von kleinen Molekülen, wie beispielsweise He, $H_2$ oder Wasser passiert werden können, für größere Moleküle jedoch undurchdringlich sind. Normalerweise und im Rahmen dieser Erfindung werden Aggregate aus weniger als 10 Graphen- bzw. Graphenoxidlagen als wenig lagiges Graphen bzw. Graphenoxid bezeichnet. Schichten mit mehr Lagen könnte man regelmäßig als Graphitoxid- bzw. Graphit-Schichten bezeichnen.

Weiterhin sind in den letzten 2 bis 3 Jahren Membranen beschrieben worden, die gestapelte Graphenoxidlagen aufweisen und häufig als Graphenoxid-Membranen bezeichnet werden und ihre prinzipielle Eignung als Trennmembran unterstreichen. Solche Membrane haben eine mit Graphit vergleichbare gelagerte Struktur, obwohl der Abstand zwischen den einzelnen Lagen größer ist, z. B. durch die angelagerte funktionale sauerstoffhaltige Gruppen und Interkalation von Wassermolekülen. Die genaue Struktur und Zusammensetzung der einzelnen Graphenoxidlagen ist, im Gegensatz zu Graphenlagen, nicht eindeutig definiert. Im Unterschied zu Graphen, enthält Graphenoxid $sp^2$ und $sp^3$ Kohlenstoffatome und deshalb zeigen die Lagen eine nicht-planare, unregelmäßig gewellte Struktur.

Graphenoxid kann beispielsweise aus Graphitoxid erhalten werden. Unter Graphitoxid wird dabei eine nichtstöchiometrische Verbindung aus Kohlenstoff, Sauerstoff und Wasserstoff verstanden, deren Summenformel stark mit den Herstellungsbedingungen variiert. Graphitoxid kann wiederum aus Graphit unter Einsatz von starken Oxidationsmitteln gewonnen werden, mittels z. B. den bekannten Synthesemethoden von Brodie-, Hummer- oder Staudenmaier. Bei der Herstellung von Graphitoxid werden die Graphenlagen im Graphit oxygeniert und man erhält ein hydrophiles Material. Eine besondere Eigenschaft des Graphitoxides ist, dass es sich kolloidal in Wasser dispergieren lässt, was zur Bildung kolloider Dispersionen führt. Die Ablösung einzelner Lagen des Graphitoxids, z. B. mittels Ultraschall-Energie, führt zu monolagigem Graphenoxid.

Die Herstellung einer Graphen-Beschichtung auf einem keramischen Substrat ist beispielsweise in WO 2014/00454 A1 nachzulesen. Dort wird bei Temperaturen zwischen 750 und 1250 °C ein keramisches Substrat mit einer Mischung aus Graphen, Graphenoxid oder Graphit und einem Silizium aufweisenden Material in einer sauerstofffreien Atmosphäre beaufschlagt.

Ferner ist aus US 2011/0148248 A1 eine Vorrichtung zur direkten Umwandlung von Wärmeenergie in Strom bekannt, die unter anderem ein paar beanstandete Oberflächen sowie ein dazwischen befindliches Gas aufweist. Die Gasmoleküle bewirken aufgrund ihrer thermischen Energie einen Ladungstransport von der ersten zur zweiten Oberfläche, die in einer speziellen Ausführungsform Graphit oder Graphen aufweisen können.

Die typische Herstellungsroute für die vorgenannte Art von Membranen sieht vor, einzelne Graphenoxidschichten über Vakuum-Filtermethoden auf einem Trägermaterial aufzubringen. Bei der Beschichtung wird eine kolloidale Dispersion bestehend aus monolagigem Graphenoxid und Wasser eingesetzt.

Alternativ ist aus H. Huang et al, "Facile one-step forming of NiO and yttrium-stabilized zirconia composite anodes with straight open pores for planar solid oxide fuel cell using phaseinversion tape casting method", Journal of Power Sources 274 (2015) 1114 bis 1117, ein Verfahren zur Beschichtung einer keramischen Schicht mit Graphit bekannt, bei dem auf einen Trägerfilm nacheinander ein Graphitschlicker und anschließend ein NiO-YSZ-Schlicker aufgebracht werden und zur Verfestigung des Grünkörpers in ein Wasserbad gegeben werden.

Obwohl die bereits im Versuchsmaßstab hergestellten ein- oder mehrlagigen Graphenoxid-Membranen sehr vorteilhafte Eigenschaften aufweisen, sind sie für kommerzielle Anwendungsgebiete derzeit noch nicht interessant genug, da sie auch noch einige Nachteile mit sich bringen. Dazu gehören:

a) Die Membranen weisen noch keinen geeigneten Träger auf, der die harschen Betriebsbedingungen in industriellen Anwendungen (hohe Temperaturen, hydrothermalen Bedingungen, korrosive Gase, aggressive Flüssigkeiten) aushalten kann.

b) Die Membranen sind in der Regel nicht fest mit dem Träger verbunden.

c) Die Membranen sind aufgrund des fehlenden robusten Trägers nicht druckstabil.

d) Die Membranen werden derzeit über Verfahren hergestellt, die nicht beliebig in einem großtechnischen Maßstab umgesetzt werden können.

e) Die Membranen weisen derzeit noch nicht die Größe und Dimensionen auf, die in industriellen Anlagen benötigt werden.

f) Die Membranen weisen keine Molekular-Siebwirkung auf, wie z.B. die bekannten amorphen $SiO_2$ basierten mikroporösen Membranen.

In den aus der Literatur bekannten mikroporösen keramischen Membranen (z. B. amorphe $SiO_2$, hybride kohlenstoffhaltige $SiO_2$, Kohlenstoff) umfasst die mesoporöse Schicht in der Regel $\gamma$-Aluminiumoxid ($\gamma$-$Al_2O_3$), Titandioxid ($TiO_2$), Zirkoniumdioxid ($ZrO_2$), Siliziumoxid ($SiO_2$) oder Mischungen aus den vorgenannten Materialien, die beispielsweise über einen Sol-Gel-Beschichtungsprozess hergestellt werden können. Diese Schichten weisen jedoch regelmäßig eine nur begrenzte chemische ($\gamma$-$Al_2O_3$, $SiO_2$), thermische ($TiO_2$, $ZrO_2$) oder hydrothermale (alle) Stabilität auf.

Aus WO 2009/1179778 A1 ist bereits eine mehrschichtige Kompositmembran zur selektiven Gastrennung bekannt, bei der auf einem mehrschichtigen porösen Träger eine gasdichte, funktionale Schicht aus einem mischleitenden Material aufgebracht wird.

Ferner ist in US 2014/0230653 A1 ein Verfahren zur Herstellung einer sehr dünnen Graphenoxidmembran beschrieben, bei dem dispergiertes Graphenoxid durch ein poröses Substrat geleitet wird, wodurch sich eine Graphenoxidmembran ausbildet. Die so hergestellten Membranen weisen eine Schichtdicke zwischen 1,8 und 180 nm auf. Die Beschichtungen selbst umfassen jeweils 3 bis 30 Lagen an Graphenoxidflocken.

Weiterhin werden bislang bekannte Graphenoxid-Membranen bei Raumtemperatur hergestellt oder nur bei leicht erhöhten Temperaturen bis 220 °C behandelt. Aufgrund der bislang eingesetzten Trägermaterialien und/oder der Eigenschaften der Graphenoxid-Membranen, beispielsweise der Schichtdicke, konnten für solche Membranen bislang keine höheren Temperaturen (T > 220 °C) angewandt werden.

Theoretisch scheint eine aus nur wenigen Graphenlagen aufgebaute Membran besonders gut für die Abtrennung von kleineren Molekülen (He, $H_2$) aus einer Gasmischung (z. B. mit $CO_2$, $N_2$, CO oder auch $CH_4$) geeignet zu

sein, da der Zwischenschichtenabstand zwischen Graphenlagen in der Größenordnung von 0,335 nm liegt. Es wird vermutet, dass der Zwischenschichtenabstand zwischen Graphenoxid-Monolagen in wenig lagigem Graphenoxid und Graphitoxid größer ist, als der zwischen Graphenlagen. In Abhängigkeit von der Anwesenheit von Wasser (Flüssig, Dampf) wird in der Literatur von Zwischenschichtenabständen zwischen Graphenoxid-Monolagen von 0,6 nm bis über 1 nm berichtet.

## Aufgabe und Lösung

Die Aufgabe der Erfindung ist es, eine Membrane umfassend Graphitoxid oder Graphit für den industriellen Einsatz bereitzustellen, die die im Stand der Technik aufgeführten Schwierigkeiten überwindet und insbesondere auch bei höheren Temperaturen, Drücken und unter hydrothermalen Bedingungen einsetzbar ist. Ferner ist es die Aufgabe der Erfindung, ein Herstellungsverfahren zur Bereitstellung einer solchen Membrane zu schaffen.

Die Aufgaben der Erfindung werden gelöst durch eine Membrane gemäß Hauptanspruch, sowie ein Verfahren zur Herstellung einer solchen Membrane gemäß Nebenanspruch. Vorteilhafte Ausgestaltungen der Membrane oder des Herstellungsverfahrens finden sich in den darauf rückbezogenen Ansprüchen.

## Gegenstand der Erfindung

Die Erfindung betrifft eine mehrschichtige keramische Membranvorrichtung mit einer Porenstruktur, die je nach Anwendungsgebiet in der Lage ist, Wasser oder kleinere Gasmoleküle, wie beispielsweise He oder $H_2$, durchzulassen und damit aus einer gasförmigen oder flüssigen Mischung abzutrennen. Dazu weist die erfindungsgemäße Membranvorrichtung einen makroporösen Träger, wenigstens eine darauf angeordnete mesoporöse Zwischenschicht und wenigstens eine auf der Zwischenschicht angeordnete mikroporöse Deckschicht umfassend Graphitoxid oder Graphit auf.

Erfindungsgemäß wird dabei ein thermisch, chemisch und mechanisch stabiles Trägersystem (makroporöse Träger und mesoporöse Schicht) vorteilhaft mit einer funktionalen Deckschicht, umfassend Graphitoxid oder Graphit, zu einer vielseitig einsetzbaren Membranvorrichtung verbunden.

Im Rahmen dieser Erfindung wird unter einer Deckschicht, umfassend Graphitoxid oder Graphit, eine Schichtung von aufeinander angeordneten Graphen und/oder Graphenoxid-Monolagen verstanden. Die Anzahl der Monolagen variiert dabei im Bereich zwischen ca. 5 und 1000. Unter der Voraussetzung, dass 1000 Monolagen Graphen eine Schichtdicke von ca. 600 nm und 1000 Monolagen Graphenoxid eine Schichtdicke von ca. 1 bis 2 $\mu$m aufweisen, liegt die Schichtdicke der Deckschicht somit typischerweise bei unter 2 $\mu$m, vorteilhaft sogar bei unter 300 nm.

Als makroporöse Trägerschicht der erfindungsgemäßen mehrschichtigen Membranvorrichtung kann beispielsweise ein poröser $\alpha$-$Al_2O_3$ Träger eingesetzt werden, welcher über übliche konventionelle keramische Pulvertechnologie-Methoden hergestellt werden kann. Ferner können aber auch die bereits bekannten Trägermaterialien, wie beispielsweise Titandioxid ($TiO_2$), Zirkoniumdioxid ($ZrO_2$), mit Yttrium stabilisiertes Zirkoniumdioxid (YSZ), Siliziumoxid ($SiO_2$), Ceroxid ($CeO_2$), Magnesiumoxid (MgO), Yttriumoxid ($Y_2O_3$), Gadoliniumoxid ($Gd_2O_3$), Siliziumkarbid (SiC), Karbon oder metallische Komponenten als Träger eingesetzt werden. Weitere geeignete keramische Materialien für die Trägerstruktur sind beispielsweise Mullit, Cordierit, Zeolith, Bariumtitanoxid ($BaTiO_3$), Siliziumnitrid ($Si_3N_4$), Siliziumoxycarbid (SiOC), Siliziumcarbonitrid (SiCN), Aluminiumnitrid (AlN) oder Mischungen aus den vorgenannten Materialien.

Der makroporöse Träger kann monolagig bzw. mehrlagig gradiert sein. Sind mehrere makroporöse Schichten vorgesehen, so weist die dem Träger entfernter angeordnete Schicht regelmäßig eine kleinere mittlere Porengröße auf, als die dem Träger näher angeordnete Zwischenschicht. Als Materialien für die makroporösen Schichten können die bereits erwähnten Trägermaterialien eingesetzt werden. Die makroporösen Schichten können mit herkömmlichen Methoden, wie beispielsweise Suspensionsbeschichtungs-Methoden oder Rakeln auf dem Träger aufgebracht werden.

Die vorgenannten Schichten können aber auch nur als eine gradierte Trägerschicht ausgestaltet sein.

Der Träger selbst kann dabei in allen bekannten Geometrien, also als flache Schicht, als zylindrisches Rohr, als Hohlfaser oder auch als Kapillare vorliegen. Für den Fall, dass der Träger die Form eines zylindrischen Rohrs, einer Hohlfaser oder einer Kapillare aufweist, können die übrigen Schichten und die Deckschicht sowohl auf der Innenseite als auch auf der Außenseite angeordnet sein. Ferner kann der Träger selbst auch als ein Vielkanalelement ausgestaltet sein, beispielsweise als Mehrkanal-Platte oder Mehrkanal-Rohr oder in einer Wabenstruktur.

Zwischen der makroporösen Trägerschicht und der funktionalen Deckschicht ist mindestens eine mesoporöse Zwischenschicht angeordnet. Sie weist aus Richtung der Träger betrachtet einerseits eine geringere mittlere Porengröße auf und andererseits eine geringere Oberflächenrauigkeit. Die mittlere Porengröße der auf der Trägerschicht angeordneten mesoporösen Zwischenschicht liegt regelmäßig zwischen 2 nm und 50 nm.

Sind mehrere mesoporöse Zwischenschichten vorgesehen, so weist die dem Träger entfernter angeordnete mesoporöse Zwischenschicht regelmäßig eine kleinere mittlere Porengröße und Oberflächenrauigkeit auf, als die dem Träger näher angeordnete Zwischenschicht. Vorteilhaft weist bei mehreren mesoporösen Zwischenschichten wenigstens eine einen mittleren Porendurchmesser < 5 nm, vorteilhaft diejenige, die für den Kontakt mit der Deckschicht vorgesehen ist.

Die vorgenannten mesoporösen Zwischenschichten können alternativ aber auch nur als eine gradierte Schicht ausgestaltet sein.

Geeignete Materialien für eine mesoporöse Schicht sind neben $\gamma$-Al$_2$O$_3$, Titandioxid (TiO$_2$), Zirkoniumdioxid (ZrO$_2$), mit Yttrium stabilisiertes Zirkoniumdioxid (YSZ), Siliziumoxid (SiO$_2$), Ceroxid (CeO$_2$), Magnesiumoxid (MgO), Yttriumoxid (Y$_2$O$_3$), Gadoliniumoxid (Gd$_2$O$_3$), Zinkoxid (ZnO), Zinnoxid (SnO$_2$), Mullit, Cordierit, Zeolith, Metal-Organic Framework materials (MOF), Ton, Bariumtitanoxid (BaTiO$_3$), Karbon, Siliziumkarbid (SiC), Siliziumnitrid (Si$_3$N$_4$), Siliziumoxycarbid (SiOC), Siliziumcarbonitrid (SiCN), Aluminiumnitrid (AlN) oder Mischungen aus den vorgenannten Materialien.

Die mesoporöse Schicht kann ebenfalls mit herkömmlichen Methoden, wie beispielsweise der Beschichtung mit einer kolloidalen Dispersion, einem Sol-Gel-Beschichtungsprozess oder einer Hydrothermalsynthese, auf die makroporöse Schicht aufgebracht werden. Dazu werden vorteilhaft Teilchen mit mittleren Teilchendurchmessern von 5 bis 200 nm zusammen mit typischen Bindern, z. B. Polyvinylalkohol, Polyethylenglykol oder Celluloseverbindungen in Wasser gelöst eingesetzt. Aufgrund der notwendigen kleinen Teilchengrößen für das Ausgangsmaterial sind metallische Materialien zur Herstellung von mesoporösen Schichten regelmäßig nicht mehr geeignet. Nach dem Beschichtungsvorgang erfolgt eine Trocknung bei Temperaturen bis 100 °C. Nach dem Trocknungsprozess erfolgt ein thermischer Behandlungsschritt bei Temperaturen bis oberhalb von 300 °C, um die Schicht zu kalzinieren.

In einer vorteilhaften Ausgestaltung der Erfindung wird eine mesoporöse Schicht umfassend mit 8 mol-% Yttriumoxid stabilisiertes Zirkoniumdioxid (8YSZ) über das Dip-Coating-Verfahren (Tauchbeschichtung) auf einem makroporösen Träger aufgebracht. Es hat sich gezeigt, dass eine solche Schicht Temperaturen bis zu 1000 °C unbeschadet übersteht. Temperaturen im Bereich 500 °C bis 900 °C werden benötigt, um in einem späteren Verfahrensschritt vorteilhaft eine vollständige Reduktion des Graphenoxids durch eine Hochtemperaturbehandlung zu bewirken.

Insbesondere weist die Membranvorrichtung wenigstens einen makroporösen Träger mit Poren im Bereich > 50 nm sowie wenigstens eine mesoporöse Zwischenschicht mit Poren im Bereich 2 nm bis < 50 nm bei einer Schichtdicke zwischen 0,1 und 10 $\mu$m auf.

Die mikroporöse Deckschicht der erfindungsgemäßen mehrschichtigen keramischen Membranvorrichtung weist regelmäßig Poren im Bereich von 0,3 bis 1,5 nm auf. Die Schichtdicke dieser Schicht beträgt regelmäßig weniger als 2 $\mu$m, bevorzugt zwischen 5 nm und 1 $\mu$m, vorteilhaft zwischen 5 nm und 300 nm. Die Porengröße dieser Deckschicht wird dabei im Wesentlichen durch den Zwischenschichtabstand der Graphen- bzw. Graphenoxidlagen der Deckschicht bestimmt.

Zur Aufbringung der mikroporösen Deckschicht auf die mesoporöse Zwischenschicht wird diese mit einer kolloidalen Dispersion, bestehend aus monolagigen Graphenoxidteilchen und Wasser, beschichtet. Als Aufbringungsmethode kommt eine Tauchbeschichtung (Dip-Coating) in Betracht. Abgesehen von den wässrigen Dispersionen können auch Dispersionen bestehend aus Graphenoxidteilchen und polaren organischen Lösungsmitteln, wie z. B. Alkohole, Ether, cyclischen Ether (THF, DMF), N-Methyl-2-pyrrolidon (NMP) eingesetzt werden.

Nach der Aufbringung der Graphenoxidteilchen erfolgt eine Trocknung bei Temperaturen bis 200 °C. Nach der Trocknung folgt eine thermische Behandlung, bei Temperaturen bis 450 °C um die notwendige Bindung der Deckschicht zur mesoporösen Schicht zu bewirken und zur Verbesserung der strukturellen Stabilität der Deckschicht.

Die Deckschicht neigt während des Trocknungsprozesses und der thermischen Behandlung regelmäßig zum Reißen. Dieser Effekt limitiert die Schichtdicke. Soll eine besonders dicke Deckschicht aufgebracht werden, bietet es sich an dieses in mehreren Verfahrensschritten durchzuführen. Dabei kann der zweite Schritt erfolgen, sobald die im ersten Schritt aufgebrachte Schicht getrocknet und gegebenenfalls ausgeheizt ist. Mit einem Aufbringungsschritt können dabei typischerweise Schichtdicken jeweils bis zu 100 nm erzielt werden.

Gemäß der Erfindung wird eine kolloidale Dispersion, bestehend aus monolagigen Graphenoxidteilchen und Wasser, über das Dip-Coating-Verfahren auf die mesoporöse Schicht aufgebracht. Es hat sich gezeigt, dass das Dip-Coating-Verfahren eine sehr homogene und kompakte Graphenoxidlagen umfassende Deckschicht liefert. Darüber hinaus ist das Tauchbeschichtungsverfahren eine Beschichtungsmethode, die ermöglicht, Membranen in allen beliebigen Größen und Dimensionen herzustellen, und die in einem großtechnischen Maßstab umgesetzt werden kann. Es folgt ein Trocknungsschritt bei einer Temperatur von ca. 25 °C. Anschließend wird die Deckschicht unter Luft ausgeheizt, vorzugsweise bei einer Temperatur von mehr als 200 °C, z. B. bei 300 °C oder auch bis maximal 450 °C. Durch diesen thermischen Verfahrensschritt wird einerseits eine robuste und thermisch stabile Deckschicht erhalten, die darüber hinaus auch eine sehr gute Verbindung zur darunter angeordneten mesoporösen Zwischenschicht aufweist.

Um die Gefahr des Brechens der Deckschicht zu verhindern, wird vorgeschlagen, die mesoporöse Zwischenschicht mit einer nur sehr dünnen Schicht umfassend Graphitoxid oder ggf. wenig lagiges Graphenoxid zu beschichten. Dazu kann insbesondere eine hoch verdünnte kolloidale Dispersion umfassend monolagige Graphenoxidteilchen eingesetzt werden. Unter einer hoch verdünnten kolloidalen Dispersion wird dabei eine Dispersion mit einem Feststoffanteil zwischen 20 und 2000 mg/Liter, vorzugsweise zwischen 200 und 400 mg/Liter verstanden.

Die aufgebrachte Schicht weist vorzugsweise eine Schichtdicke von weniger als 2 $\mu$m auf, bevorzugt sogar

nur eine Schichtdicke im Bereich zwischen 5 nm bis 1 μm, und besonders vorteilhaft im Bereich zwischen 5 nm und 300 nm.

Die nach dem vorgenannten Verfahren hergestellte Membranvorrichtung weist typischerweise eine Deckschicht auf, die überwiegend Graphitoxid oder wenig lagiges Graphenoxid umfasst.

Die einzelnen Graphenoxidlagen der Deckschicht weisen regelmäßig einen Zwischenschichtabstand von 0,6 nm bis 1,3 nm je nach Feuchtigkeit auf. Graphenoxid selbst ist hydrophil. Eine solche funktionale Schicht ist daher insbesondere für Trennaufgaben geeignet, bei denen Wasser in der Flüssig oder Gasphase zu trennen ist von anderen größeren Molekülen.

Die funktionale Graphitoxid oder wenig lagige Graphenoxid Schicht ist auch geeignet für die klassische Gastrennung. Der Vorteil einer solchen Schicht ist, dass der Abstand zwischen den einzelnen Lagen vorteilhaft durch Anpassen der Feuchtigkeit eingestellt werden kann. Es hat sich gezeigt, dass die Membrane unter trockenen Bedingungen selektiv ist für He und $H_2$. Größere Moleküle werden zurückgehalten. Unter feuchten Bedingungen werden Wassermoleküle zwischen den Graphenoxidlagen interkaliert. Dadurch ist die Membrane fähig, selektiv wasserlösliche Gasmoleküle von weniger löslichen Molekülen zu trennen. Das wasserlösliche $CO_2$ kann dabei z. B. durch die Membrane dringen, während weniger lösliche Moleküle wie z. B. $N_2$ mehr zurückgehalten werden.

Je nach Anwendung ist anstelle einer Deckschicht umfassend Graphitoxid oder wenig lagiges Graphenoxid jedoch auch eine Ausgestaltung mit einer zumindest teilweise oder vollständig vorliegenden Graphit oder wenig lagige Graphen Deckschicht wünschenswert.

Die zumindest teilweise Reduktion der Deckschicht und die Bildung einer Graphit-ähnlichen Struktur erscheinen sehr interessant. Graphit besteht aus $sp^2$-hybridisierten Kohlenstoffatomen, welche durch sehr stabile C-C Bindungen verbunden sind. Die $sp^2$-Hybridisierung und die damit vorhandenen delokalisierten π-Elektronen erklären nicht nur die elektrische Leitfähigkeit des Graphits. Graphit erhält dadurch auch eine weitgehend chemisch beständige Struktur und ist im Vergleich mit Graphitoxid viel beständiger gegenüber thermische Zersetzung. Die Anwesenheit von $sp^3$-hybridisiertem Kohlenstoff und sauerstoffhaltigen funktionellen Gruppen in Graphenoxidlagen führt in der Regel dazu, dass diese thermisch und chemisch unstabil werden. Thermische Zersetzung (Oxidation mit Luft) und Ätzen (z. B. mit Wasserdampf) des Materials fangen üblicherweise an diese Stellen an.

Es konnte beispielsweise gezeigt werden, dass Graphenoxidteilchen nach einer hydrothermalen Behandlung mit Wasserdampf bei 200 °C über einen Zeitraum von 10 Stunden bereits in kleinere Fragmente zerfielen. Daher ist es ratsam, die Deckschicht während der Herstellung in ein Graphit-ähnliches Material mit überwiegend $sp^2$-hybridisiertem Kohlenstoff zu überführen, wenn eine Anwendung für eine Gastrennung bei höheren Temperaturen und dem Einsatz von Wasserdampf beabsichtigt ist.

Unabhängig von der Verbesserung der Stabilität wurde ebenfalls herausgefunden, dass eine thermische Reduktion der graphitoxidischen Deckschicht bei hohen Temperaturen zu einer deutlichen Verbesserung der Gaspermeation des permeierenden Gases führt. Nach einer solchen thermischen Reduktion wird ein Material erhalten, welches vorteilhaft nur noch vernachlässigbare Anteile an funktionalen Gruppen aufweist. Weniger funktionale Gruppen bedeuten aber auch weniger sterische Behinderungen beim Durchgang des permeierenden Gases durch die Mikrokanälen zwischen den einzelnen Lagen, und damit eine erhöhte Gasdurchlässigkeit.

Für diese Fälle sieht die Erfindung vor, dass die zuvor hergestellte Graphitoxid oder wenig lagiges Graphenoxid umfassende Deckschicht zusammen mit der Trägerschicht und der mesoporöse Zwischenschichten einem Reduktionsschritt unterzogen werden, bei dem das Graphenoxid der Deckschicht zumindest teilweise zu Graphen reduziert wird.

Eine Reduzierung des Graphenoxids kann dabei sowohl chemisch als auch thermisch erfolgen. Bei der chemischen Reduktion wird ein Reduktionsmittel, z. B. Hydrazin, $NaBH_4$, HI oder Ascorbinsäure bei Temperaturen bis zu 200 °C eingesetzt. Die chemische Reduktion von Graphenoxid kann dabei sowohl an Graphenoxid-Teilchen in der kolloidaler Dispersion als an einen auf den Träger aufgetragenen Graphitoxid Schicht erfolgen.

Für eine vollständige thermische Reduktion sind höhere Temperaturen zwischen 500 und 900 °C notwendig. Graphitoxid ist allerdings thermisch wenig stabil und wandelt sich im Prinzip ab 200 °C in CO, $CO_2$, Wasser und Graphit um. Obwohl es in der Praxis ein relativ breites Temperaturgebiet gibt, wo diese Reaktion stattfindet, ist es deutlich, dass eine Behandlung bei höheren Temperaturen mindestens zur teilweisen Zersetzung des Ausgangsmaterials führt.

Daher wird vorgeschlagen die Eliminierung von sauerstoffhaltigen Gruppen der Deckschicht in Vakuum oder unter reduzierender Atmosphäre (z. B. einer Mischung aus $H_2$ und Ar) durchzuführen. Theoretisch führt das Erhitzen von Graphenoxid in inerter Atmosphäre zu einer Umwandlung in reines Graphen und zu einer Eliminierung von Wasser- und Sauerstoff. Es ist allerdings noch nicht geklärt, welche Reaktionsmechanismen dabei stattfinden. In der Praxis wird allerdings kein perfektes Graphen erhalten, eher ein teilweise reduziertes Graphenoxid. Zudem sind hohe Temperaturen im Bereich zwischen 500 und 900 °C notwendig, um alle sauerstoffhaltigen funktionalen Gruppen zu eliminieren um somit vollständig reduziertes Graphen zu erhalten.

In Graphenoxid können Carboxyl-, Carbonyl und Lactongruppen bei ca. 450 °C reduziert werden. Chinonegruppen zersetzen sich regelmäßig zwischen 500 und 900 °C. Oberhalb von 900 °C beginnen auch Hydroxylgruppen sich zu zersetzen. Carboxyl-, Carbonyl-, Lacton- und Chinonegruppen scheinen für Reaktionen mit Wasserdampf verantwortlich zu sein. Bei Graphitoxid, welches thermisch in einer $H_2$/Ar-atmosphäre reduziert wurde, werden die vorgenannten Gruppen zersetzt und durch Ausheizen bei Temperaturen zwischen 500 und 800 °C ausgetrieben, wodurch ein deutlich inerteres Material erhalten werden kann.

Alternativ kann die Umwandlung von Graphitoxid bis zum Graphit auch in einer kohlenstoffhaltige Atmosphäre durchgeführt werden (z. B. Acetylen), wobei ein Selbstregenerationsprozess verbessert stattfinden kann. Andere mögliche Methoden sind beispielsweise die Behandlung in Gegenwart von Wasserstoffplasma, einem starken Lichtpuls (z. B. Xenon) oder von Mikrowellen.

Die Auswahl, über welches Verfahren die Reduktion erzielt werden kann, hängt unter anderen von der Materialwahl der eingesetzten Trägerschicht und den Zwischenschichten ab. Sofern diese den für die Reduktion notwendigen höheren Temperaturen nicht standhalten, z. B. aufgrund von Phaseninstabilitäten oder sonstigen thermischen Reaktionen, kann auf die chemische Reduktion zurückgegriffen werden.

In einer vorteilhaften Ausgestaltung der erfindungsgemäßen mehrschichtigen Membranvorrichtung umfasst die mesoporöse Zwischenschicht, Zirkoniumdioxid, insbesondere mit Yttrium stabilisiertes Zirkoniumdioxid (YSZ), und vorteilhaft das so genannten 8YSZ, welches in besonderem Maße thermisch stabil ist, und eine thermische Reduktion bei Temperaturen bis zu 1000 °C ermöglicht.

Im Rahmen der Erfindung wurde herausgefunden, dass der Einsatz und die Verwendung eines thermisch stabilen, keramischen oder metallischen Trägers, bzw. eines Trägersystems dazu führt, dass die Deckschicht umfassend Graphenoxid oder Graphen als eigentliche funktionale Schicht der keramischen Membranvorrichtung vorteilhaft thermisch behandelt werden kann. Ein thermischer Behandlungsschritt ist bei der Herstellung einer mikroporösen Membrane von entscheidender Wichtigkeit. Erst in einem solchen Verfahrensschritt wird die notwendige Verbindung zwischen der mikroporösen Schicht und der darunter liegenden Schicht hergestellt. Sobald eine solche Verbindung nur unzureichend oder gar nicht vorhanden ist, besteht die Gefahr, dass sich die Membrane während des Betriebs ablöst und die Funktionsweise der Membranvorrichtung nicht mehr sichergestellt werden kann.

Ein weiterer Vorteil eines thermisch beständigen Trägers bzw. eines Trägersystems ist, dass dadurch die für einige Anwendungsfälle notwendige Reduktion des Graphenoxids zu Graphen innerhalb der Deckschicht, welche nur bei hohen Temperaturen erfolgt durchgeführt werden kann, direkt und vorteilhaft zusammen mit dem mehrschichtigen Trägersystem umfassend die Trägerschicht sowie ein oder mehrere makro- und mesoporöse Zwischenschichten erfolgen kann.

Die Reduktion des Graphenoxids kann prinzipiell sowohl mit chemischen als auch mit thermischen Methoden erzielt werden. Dabei mussten die aus dem Stand der Technik bekannten Herstellungsverfahren aufgrund der geringen thermischen Stabilität der Trägermaterialien und/oder der Eigenschaften der Graphenoxid-Membranen bislang auf die weniger praktikable Methode der chemischen Reduktion zurückgreifen, während bei der erfindungsgemäßen Membranvorrichtung vorteilhaft die thermische Reduktion angewendet werden kann.

Die erfindungsgemäße mehrschichtige, insbesondere keramische, Membranvorrichtung ist vorteilhaft nicht nur chemisch beständig sondern hält je nach Träger regelmäßig auch hohe Drücke und Temperaturen bis 1000°C schadlos aus.

Damit kann die erfindungsgemäße mehrschichtige Membranvorrichtung insbesondere für die industrielle Abtrennung von Wasser oder Gasen, wie beispielsweise He oder $H_2$ eingesetzt werden.

Um den bei industriellen Trennprozessen herrschenden typischen Temperatur-, Korrosions- und Druckbedingungen standzuhalten, wird bei der erfindungsgemäßen mehrschichtigen Membranvorrichtung die funktionale Graphitoxid- bzw. Graphitschicht auf eine thermisch, chemisch und druck stabile, poröse, keramische Trägerschicht angeordnet. Eine thermische Behandlung der beiden Komponenten führt dazu, dass sich eine mechanisch stabile Verbindung zwischen der aktiven Membranschicht und der Trägerschicht ausbildet. Die so erhaltenen mehrschichtig (gradiert) aufgebaute Trennmembrane ist mechanisch robust und hoch temperatur- und druckstabil. Sie ist widerstandsfähig gegenüber den meisten Chemikalien, insbesondere gegenüber allen Arten von organischen Flüssigkeiten, sowie (nicht starkoxidierende) Säuren und Laugen.

Die erfindungsgemäße mehrschichtige Membranvorrichtung mit ihrer funktionellen mikroporösen Graphitoxid- bzw. Graphitschicht ist vorteilhaft für den Einsatz bei der Wassertrennung bzw. -reinigung oder auch für die Gastrennung geeignet. Verfahren, bei denen die erfindungsgemäße mehrschichtige Membranvorrichtung vorteilhaft eingesetzt werden kann, sind beispielsweise die Pervaporisation (PV), die Dampfpermeation (engl. VP), die Nanofiltration (NF) oder die Gastrennung.

Es hat sich herausgestellt, dass die erfindungsgemäße mehrschichtige keramische Membranvorrichtung je nach Ausbildung mit einer Graphitoxid- oder Graphit umfassenden Deckschicht vorteilhaft für Wasser, $H_2$ und He durchlässig ist, größere Moleküle und Verbindungen in flüssiger oder gasförmiger Form jedoch zurückhält.

Es wurde herausgefunden, dass der He- und $H_2$-Fluss der erfindungsgemäßen Membranvorrichtung der bekannten Arrheniusgleichung $J = J_0 \exp(-E_{act} / RT)$ folgt.

Dieses Verhalten ist typisch für qualitativ hochwertige mikroporöse Membranen mit sehr kleinen Poren (< 0,5 nm) und einer sehr engen Porengrößenverteilung. Es ist ebenfalls bekannt, dass Membranen mit thermisch aktiviertem Gastransport regelmäßig Mokelularsiebeigenschaften aufweisen und große Separationsfaktoren zeigen.

Aus dem Stand der Technik vergleichbare Graphenoxidmembranen zeigen bislang keine Molekularsiebeigenschaften, was möglicherweise auf das Vorhandensein von Defekten in diesen Membranen oder auf eine inhomogene Abdeckung des Trägermaterials hinweisen könnte. Das Auftreten eines aktivierten Transportes und der Molekularsiebeigenschaften der erfindungsgemäßen Membranvorrichtung kann insofern ein Anzeichen dafür sein, dass die Qualität und die Homogenität der Deckschicht aufgrund des gradierten Trägersystems mit wenigstens einer mesoporösen Zwischenschicht als Basis für die Deckschicht bei der erfindungsgemäßen Membranvorrichtung deutlich höher ist, als bei den bislang bekannten Graphenoxidmembranen.

Bei der erfindungsgemäßen Membranvorrichtung ist es zudem vorteilhaft möglich, die Abstände zwischen den einzelnen Graphenoxid- oder Graphenlagen der Deckschicht anzupassen, wodurch das Durchlässigkeitsverhalten der Membrane aktiv variiert werden kann. Im Fall von Graphitoxidschichten in der Deckschicht kann der Abstand zwischen den einzelnen Graphenoxidlagen beispielsweise durch die Einstellung der Feuchtigkeit der beteiligten Gase eingestellt werden. Eine weitere Möglichkeit der Zwischenschichtabstände kann über den Einsatz von Vernetzungsmitteln (Crosslinking) erfolgen, die regelmäßig die Abstände zwischen den einzelnen Lagen fixieren. Eine Vernetzung der einzelnen Lagen kann dabei durch die Vernetzung einzelner reaktiver Gruppen der Graphenoxidlagen erfolgen. Wird ein anorganisches Vernetzungsmittel eingesetzt, so bleiben Vernetzungen zwischen den Lagen während einer thermischen Reduktion von Graphitoxid in Graphit regelmäßig erhalten.

Die Deckschicht der erfindungsgemäßen Membranvorrichtung kann mit Hilfe von thermischen Verfahrensschritten vorteilhaft reversibel reduziert und wieder oxidiert werden. Eine Reduktion führt regelmäßig ausgehend von einer Graphitoxidschicht zu einer teilweise reduzierten Graphitoxidschicht bis hin zu einer Graphitschicht. Eine Oxidation kehrt diese Vorgänge entsprechend um. Auf diese Weise lassen sich einerseits die hydrophilen bzw. hydrophoben Eigenschaften der Membrane und andererseits die Gasdurchlässigkeit entsprechend gezielt einstellen.

Beispielsweise zeigt eine Graphitoxid aufweisende Deckschicht, die bei 300 °C in Luft behandelt wurde, zunächst hydrophile Eigenschaften, während sie nach einer Auslagerung bei 750 °C in einer Mischung aus 3 % $H_2$ und 97 % Ar hydrophobe Eigenschaften zeigt. Gleichzeitig konnte damit die He- und $H_2$-Permeation um den Faktor 2 bis 3 gesteigert werden.

Nach einer weiteren Behandlung bei 300 °C in Luft zeigte die Deckschicht wieder die anfänglichen hydrophilen Eigenschaften.

Spezieller Beschreibungsteil

Zur weiteren Verdeutlichung der Erfindung wird diese anhand von einigen Figuren, Diagrammen und Ausführungsbeispielen näher erläutert, ohne dass dies zu einer Einschränkung der Erfindung führen soll. Es zeigen:

Figur 1: Schematische Darstellung des Aufbaus der erfindungsgemäßen mehrschichtigen Graphit- bzw. Graphitoxid-Membranvorrichtung.

Figur 2: Schematische Darstellung der alternierenden Verfahrensschritte bei der Herstellung der erfindungsgemäßen Membranvorrichtung.

Figur 3: Schematische Darstellung zweier alternativer Verfahrensschritte für eine zumindest teilweise Reduktion des Graphitoxids zu Graphit.

Figur 4: Versuchsergebnisse von Permporosimetriemessungen an einer erfindungsgemäßen Membranvorrichtung mit zwei unterschiedlichen mesoporösen Zwischenschichten.

Figur 5: Hochaufgelöstes TEM-Bild der Graphit-Deckschicht.

Figur 6: Versuchsergebnisse von Durchflussuntersuchungen für He, $H_2$, $CO_2$ und $N_2$ an einer erfindungsgemäßen Membranvorrichtung anhand von zwei unterschiedlichen Deckschichten.

Figur 7: Arrhenius-Auftragung der Durchflussergebnisse für He und $H_2$ zur Ermittlung der entsprechenden Aktivierungsenergien.

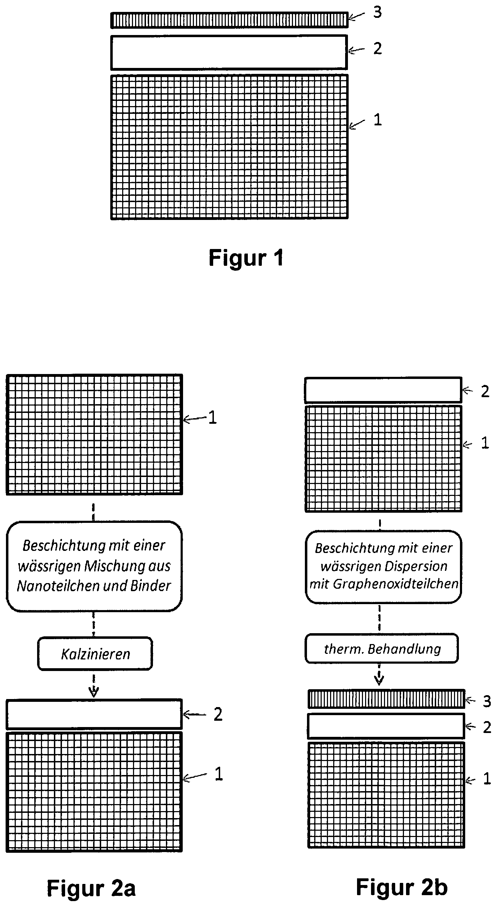

In der Figur 1 ist der schematische Querschnitt einer Ausgestaltung der Erfindung dargestellt. Die Membrane umfasst aufeinander aufbauend einen metallischen oder keramischen porösen Träger 1, eine auf diesem makroporösen Träger angeordnete keramische, mesoporöse Zwischenschicht 2, sowie eine auf dieser mesoporösen Zwischenschicht angeordnete mikroporöse Deckschicht 3, die Graphitoxid bzw. wenig lagiges Graphenoxid oder Graphit bzw. wenig lagiges Graphen umfasst. Der makroporöse Träger 1 kann monolagig bzw. mehrlagig gradiert sein. Die mesoporöse Zwischenschicht 2 kann ebenfalls monolagig bzw. mehrlagig gradiert sein.

Die Figur 2 zeigt schematisch die Herstellungsprozesse für die erfindungsgemäße Membranvorrichtung. Auf der linken Seite (Figur 2a) ist zunächst die Aufbringung der mesoporösen Zwischenschicht 2 auf den makroporösen Träger 1 dargestellt, während auf der rechten Seite (Figur 2b) die Aufbringung der funktionalen Deckschicht 3 auf der mesoporösen Zwischenschicht 2 in einem sich daran anschließenden Verfahrensschritt dargestellt wird.

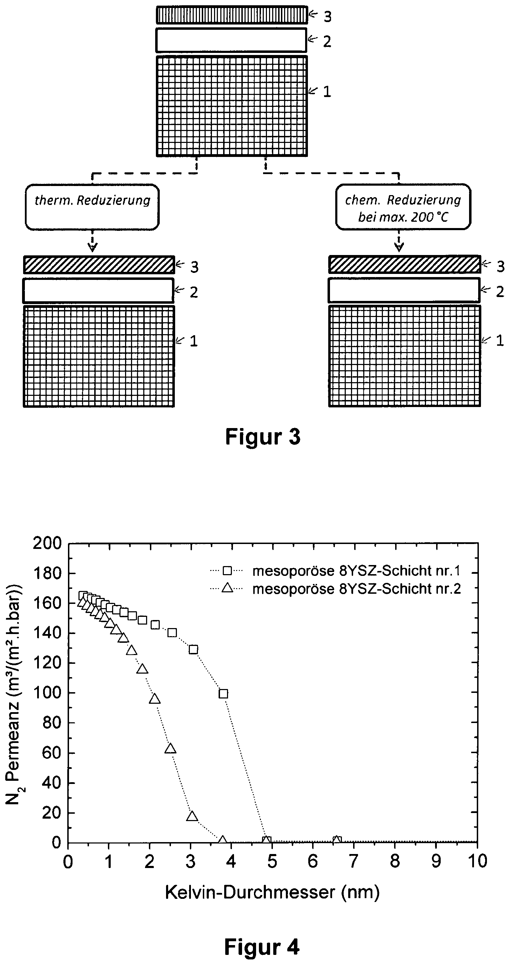

In der Figur 3 sind die alternativen Verfahren zur Reduktion des Graphenoxids zu Graphen dargestellt. Eine thermische Reduktion (linke Seite) in z. B. Vakuum, Inertgas oder unter einer reduzierenden Atmosphäre (z. B. Ar/H$_2$ Gemisch) benötigt höhere Temperaturen und kann nur für Membranvorrichtungen angewendet werden, die Träger und Zwischenschichten aus einem entsprechend temperaturbeständigen Material aufweisen. Für nicht so temperaturbeständige Materialien bietet sich alternativ eine chemische Reduktion (rechte Seite) mit einem flüssigen oder gasförmigen Reduktionsmittel an.

Ausführungsbeispiel 1:

Herstellung einer gradierten Membrane umfassend einen flachen oder röhrenförmigen makroporösen Träger aus α-Al$_2$O$_3$, eine mesoporöse Zwischenschicht aus mit 8 mol-% Yttriumoxid stabilisiertem Zirkoniumdioxid (8YSZ) und eine mikroporöse Graphitoxid-Deckschicht.

Die flachen Träger bestehen aus einer Monolage und weisen Porengrößen um ca. 80 nm auf (ermittelt über Quecksilber-Porosimetrie). Die röhrenförmigen Träger sind als gradierte Schichten ausgebildet. Die α-Al$_2$O$_3$ Schichten, die im Weiteren mit einer mesoporösen und einer mikroporösen Schicht beschichtet werden, weisen eine ähnliche Porengröße im Bereich von ca. 70 nm auf.

Die Herstellung der flachen Träger umfasste dabei die Schritte:

1) Foliengießen einer α-Al$_2$O$_3$ Pulversuspension (Sumitomo AKP-30 Pulver) unter Vakuum in Platten mit einer Schichtdicke von ca. 3 mm und der gewünschten Größe,
2) Sinterung der Grünplatten bei Temperaturen um die 1100 °C,
3) Abschleifen und
4) Polieren einer Seite der Platte mit einer Diamantpaste (Struers, DP-Paste 6 μm und 3 μm).

Die endgültige Schichtdicke des so hergestellten porösen Träger beträgt ungefähr 2 mm. Als röhrenförmige Träger wurden kommerziell erhältliche röhrenförmige, poröse α-Al$_2$O$_3$ Membranen (Inopor®) mit einer Porengröße in einem Bereich, der für die Ultrafiltration geeignet ist, eingesetzt. Diese Träger wurden gradiert, d. h. das poröse röhrenförmige Trägermaterial wurde auf der Innenseite mit drei weiteren Schichten aus α-Al$_2$O$_3$ beschichtet.

Die oberste α-Al$_2$O$_3$-Schicht weist dabei eine Porengröße um die 70 nm auf. Alle Träger wiesen an den Enden Glasdichtungen auf. Die Aufbringung der Deckschicht erfolgte auf 105 mm und 250 mm langen Trägern mit einem äußeren Durchmesser von 10 mm und einem inneren Durchmesser von 7 mm.

Eine gradierte mesoporöse Schicht wurde mittels Tauchbeschichtung aufgebracht, wobei zwei verschiedene Arten von 8YSZ-enthaltenden Flüssigkeiten eingesetzt wurden. Die erste Flüssigkeit umfasst eine wässrige Dispersion mit Teilchen mit einer Partikelgröße um die 60 nm (ermittelt über dynamische Lichtstreuung). Die zweite Flüssigkeit umfasst ein Sol mit einer Partikelgröße zwischen 30 und 40 nm. Es wurde Polyvinylalkohol (PVA, 60.000 g/mol) zugefügt, um ein starkes Eindringen der 8YSZ-Teilchen während des Beschichtungsschrittes zu verhindern.

Alle Beschichtungsschritte wurden in einem Reinraum durchgeführt. Um auch die Flüssigkeiten vor Staubeinflüssen zu bewahren, wurden diese vor einem Einsatz mit Hilfe von 0,8 μm Filterspritzen (Whatman FP 30/0.8CA) gereinigt.

Zur Erzeugung der Beschichtungsflüssigkeit der ersten mesoporösen Schicht wurden 4 g eines kommerziell erhältlichen 8%Y$_2$O$_3$-dotierten ZrO$_2$ (8YSZ) nano-Pulvers (Sigma Aldrich Catalogue Nr. 572349) in 100 ml einer 0,05 M (mol/l) Lösung aus HNO$_3$ in Wasser mit Hilfe von Ultraschall dispergiert. Nach 15 minütiger Ultraschallbehandlung wurde die Dispersion in Zentrifugenröhrchen überführt und bei 6500 rpm über 4 Minuten lang zentrifugiert. Es entstehen 2 Phasen mit einem festen Sediment aus den größeren Teilchen sowie einer überstehenden Flüssigkeit, welche die gewünschten Nanoteilchen für die Beschichtung der mesoporöse Schicht enthält. Der Überstand wird mit einer Pipette abgenommen.

In einem zweiten Schritt wurde ein Lösung aus Polyvinylalkohol (PVA) in wässriger HNO$_3$ (0,05 M) hergestellt. Dazu wurden 3 g PVA zu 100 ml HNO$_3$-Lösung gegeben und die Mischung anschließend bei 98 °C und Rückfluss über Nacht (~ 16 Stunden) erhitzt.

Die Beschichtungsflüssigkeit für die erste mesoporöse Zwischenschicht wird dann durch Mischen des Überstandes mit der PVA-Lösung im Verhältnis 3 zu 2 erzeugt.

Die flachen Träger wurden mit der 8YSZ-Partikel umfassenden Flüssigkeit einerseits über Rotationsbeschichtung und andererseits über Tauchbeschichtung beschichtet. Die röhrenförmigen Träger wurden auf der Innenseite über spezielle Vorrichtungen beschichtet. Diese umfasst einen Halter für den zu beschichtenden Träger sowie eine Halterung für eine Flasche mit der Beschichtungsflüssigkeit, die über eine flexible Leitung miteinander verbunden sind. Während der Träger fixiert ist, wird die Beschichtungsflüssigkeit durch Anheben der Flasche mit der Flüssigkeit in den Träger überführt. Beispielsweise wurde so der Flüssigkeitspegel mit einer Geschwindigkeit von 10 mm/s angehoben bis der Träger komplett gefüllt war. Nach 30 Sekunden wurde der Flüssigkeitspegel mit einer Geschwindigkeit von 10 mm/s wieder abgesenkt. Der so beschichtete Träger wurde für ca. 1 Stunde an Luft getrocknet und anschließend thermisch behandelt. In einem konventionellen Ofen wurden die Schichten in Luft bei 500 °C für 2 Stunden kalziniert. Die Aufheiz- und Abkühlschritte erfolgten mit 1 °C/min. Bei einem typischen Syntheseweg wurden die vorgenannten Schritte mit Beschichten - Trocknen - Aufheizen jeweils zweimal durchgeführt. Mit Hilfe von Untersuchungen mittels Rasterelektronenmikroskop (engl. scanning electron microscope, SEM) wurde die Schichtdicke der hergestellten mesoporösen Schicht zu 1 bis 2 $\mu$m bestimmt.

Die Porengröße dieser mesoporösen 8YSZ-Schicht wurde mit Hilfe der Permporosimetrie ermittelt. Die Permporosimetrie ist eine etablierte Methode für die Charakterisierung von mesoporösen Schichten. Gemessen wird die Permeanz eines Gases, beispielsweise von $N_2$, welches durch die poröse Schicht geleitet wird. Wird das Gas mit einer kondensierbaren Flüssigkeit, beispielsweise mit Wasser, befeuchtet, werden die Poren der Schicht mit zunehmendem Feuchtegehalt mehr und mehr verblockt, durch die kapillare Kondensation der Flüssigkeit innerhalb der Poren.

Basierend auf der Kelvingleichung kann der sogenannte Kelvin-Radius (und der Kelvin-Durchmesser) bestimmt werden. In Figur 4 ist der Verlauf der $N_2$-Permeanz der mesoporösen 8YSZ-Schicht in Abhängigkeit des Kelvin-Durchmessers dargestellt. Die Messungen wurden bei Raumtemperatur mit Wasser als kondensierbare Flüssigkeit durchgeführt. Die Membrane befindet sich auf der Innenseite einer 250 mm langen röhrenförmigen $\alpha$-$Al_2O_3$-Trägerstruktur. Die Messpunkte sind als Quadrate eingezeichnet.

Der Kelvin-Durchmesser, der 50 % der ursprünglichen Permeanz entspricht, kann als mittlerer Porendurchmesser definiert werden. Die 8YSZ-Schicht weist demnach einen mittleren Porendurchmesser ($d_{50}$) von ca. 4 bis 4,5 nm auf. Es fanden sich keine Poren mit einem Durchmesser von mehr als 7 nm. Zudem ist eine sehr enge Porengrößenverteilung ersichtlich, da mehr als 95 % der Poren eine Durchmesser von kleiner 5 nm aufweisen.

Die zweite mesoporöse 8YSZ-Schicht mit einer kleineren Porengröße wurde mit Hilfe eines wässrigen Sols aufgebracht. In einem typischen Verfahrensschritt wurden in einem Erlenmeyerkolben 50 ml 2-Propanol (Merck, SeccoSolv®, Catalogue Nr. 100994) zu 11,6 g einer 70 Gew.-%igen Zirkonium (IV)propoxidlösung (Sigma-Aldrich, Catalogue Nr. 333972) gegeben. Die Mischung wurde für 15 Minuten gerührt und anschließend unter Rühren mit 125 ml einer 1M wässrigen $HNO_3$-Lösung versetzt. Während des Aufheizens wandelt sich die Mischung zunächst in eine klare Lösung und danach in ein Sol um. Die Teilchengröße des Sols hängt von der Aufheizzeit ab. Eine Beschichtungsflüssigkeit, die für die zweite mesoporöse Schicht geeignet ist, wird nach ca. 18 Stunden erhalten.

Das fertige Sol wird unter Rühren mit 1.52 g $Y(NO_3)_3.6H_2O$ (Sigma Aldrich, Catalogue Nr. 237957) in 175 ml einer wässrigen 0,05 M $HNO_3$-Lösung versetzt, um mit 8 mol-% Yttriumoxid stabilisiertem Zirkoniumdioxid (8YSZ) zu erhalten.

In einem zweiten Schritt wurde ein Lösung aus Polyvinylalkohol (PVA) in wässriger $HNO_3$ (0,05 M) hergestellt. Dazu wurden 3 g PVA zu 100 ml $HNO_3$-Lösung gegeben und die Mischung anschließend bei 98 °C und Rückfluss über Nacht (ca. 16 Stunden) erhitzt.

Die Beschichtungsflüssigkeit für die zweite mesoporöse Zwischenschicht wird dann durch Mischen von 5 ml des Sols mit 20 ml einer wässrigen 0,05 M $HNO_3$-Lösung und 20 ml der PVA-Lösung erzeugt.

Die vorgenannte erste mesoporöse 8YSZ-Schicht mit einem mittleren Porendurchmesser von 4 bis 4,5 nm wurde anschließend mit der zweiten Beschichtungsflüssigkeit behandelt. Dabei kam dieselbe Vorrichtung zum Einsatz, mit der auch die erste Beschichtung erfolgte. Die beschichteten Träger wurden ebenfalls zunächst für 1 Stunde an Luft getrocknet und anschließend wie bereits vorherbeschrieben kaliziert. Mit Hilfe von SEM-Untersuchungen wurde die Schichtdicke der hergestellten zweiten mesoporösen Schicht zu 200 bis 400 nm bestimmt.

In Figur 4 ist auch der Verlauf der $N_2$-Permeanz der zweiten mesoporösen 8YSZ-Schicht auf der Innenseite einer 250 mm langen röhrenförmigen $\alpha$-$Al_2O_3$ -Trägerstruktur ermittelt durch Permporosimetrie dargestellt. Die Messpunkte sind als Dreiecke gekennzeichnet. Die zweite 8YSZ-Schicht weist demnach einen mittleren Porendurchmesser ($d_{50}$) von ca. 2 bis 2,5 nm auf. Es fanden sich keine Poren mit einem Porendurchmesser von mehr als 5 nm. Zudem ist erneut eine sehr enge Porengrößenverteilung ersichtlich, da mehr als 95 % der Poren eine Größe von kleiner als 3,5 nm aufweisen.

Die hydrothermale Stabilität der gradierten mesoporösen 8YSZ-Schicht wurde untersucht. Die beschichteten Träger wurden bei 300 °C in Wasserdampfatmosphäre bei 30 bar in einen Autoklaven für eine Woche ausgelagert. Es konnten im Anschluss daran keinerlei Risse oder vergrößerte Poren festgestellt werden. Die Kurven der Permporosimetrie-Messungen zeigten keinen signifikanten Unterschied zu den beschichteten Trägern vor der Auslagerung.

Ein Vergleich der SEM-Untersuchungen an frischen und ausgelagerten Proben bestätigte, dass die Schichten durch die Auslagerung bei hohen Temperaturen nicht beeinflusst wurden.

Um die thermische Stabilität zu untersuchen wurden die beschichteten Träger bei 600 °C, 700 °C und 800 °C jeweils für 2 Stunden aufgeheizt. Auch hier zeigten die Kurven der Permporosimetrie-Messungen keinen signifikanten Unterschied zu den beschichteten Trägern, welche bei 500 °C für 2 Stunden kalziniert wurden.

Auf diese so erzeugte 2 lagige (gradierte) mesoporöse 8YSZ-Zwischenschicht wurde anschließend die Deckschicht umfassend Graphitoxid aufgebracht. Aus Graphit kann nach bekannter Art, zum Beispiel der Hummer Methode, die benötigte Graphenoxid-Dispersion mit einlagigem Graphenoxid hergestellt werden. Alternativ können auch kommerziell erhältliche einlagige Graphenoxidteilchen eingesetzt werden. Beispielsweise wird aus 1 Teil einer kommerziell erhältlichen einlagigen Graphenoxidteilchen-Dispersion mit einer Konzentration von 4 mg/l (Sigma Aldrich Catalogue Nr. 777676) und 20 Teilen demineralisiertem Wasser eine verdünnte, einlagige Graphenoxidteilchen-Dispersion gebildet. Anschließend wurde diese Dispersion mit einer 5 $\mu$m Filterspritze (Whatman FP 30/5.0 CN) gereinigt. Die mittlere Teilchengröße der Graphenoxidteilchen betrug ca. 500 nm - 1 $\mu$m, gemessen über dynamische Laserlichtstreuung.

Mit Hilfe dieser Beschichtungsdispersion konnte eine homogene und defektfreie Graphitoxid-Deckschicht auf der gradierten mesoporösen 8YSZ-Zwischenschicht aufgebracht werden. Auf planaren Substraten wurde die Beschichtungsdispersion über Rotationsbeschichtung oder über Tauchbeschichtung aufgebracht. Für die Beschichtung der Innenflächen von rohrförmigen Trägern, incl. der mesoporösen 8YSZ- Zwischenschichten, wurde dieselbe Vorrichtung eingesetzt, die bereits zur Aufbringung der mesoporösen Zwischenschichten auf dem Träger verwendet wurde.

Der Flüssigkeitspegel der verdünnten einlagigen Graphenoxidteilchen-Dispersion wurde mit einer Geschwindigkeit von 10 mm/s angehoben bis der Träger mit der mesoporösen Zwischenschicht komplett gefüllt war. Nach 30 Sekunden wurde der Flüssigkeitspegel mit einer Geschwindigkeit von 10 mm/s wieder abgesenkt. Der so beschichtete Träger mit Zwischenschicht wurde für ca. 1 Stunde an Luft getrocknet und anschließend thermisch behandelt. In einem konventionellen Ofen wurden die beschichteten Träger in Luft bei ca. 300 °C für 1 Stunde geheizt. Die Aufheiz- und Abkühlschritte erfolgten mit 1 °C/min. Bei einem typischen Syntheseweg wurden die vorgenannten Schritte mit Beschichten - Trocknen - Aufheizen jeweils zweimal durchgeführt. Mit Hilfe von SEM-Untersuchungen wurde die Schichtdicke der so hergestellten Deckschicht zu ca. 10 - 20 nm bestimmt.

Die auf diese Weise hergestellte gradierte Membrane mit einer Deckschicht umfassend überwiegend Graphitoxid ist sehr hydrophil und zeigt eine hohe Durchlässigkeit für Wasserdampf. Es wurden Pervaporationsuntersuchungen durchgeführt, um die Selektivität der Membrane für Wasser gegenüber einem zweiten, größeren Molekül zu bestimmen. Dazu wurde Isopropanol (IPA), welches häufig bei Pervaporationsuntersuchungen eingesetzt wird, als weiteres größeres Testmolekül verwendet. Die Untersuchungen wurden an rohrförmigen Membranen mit einer Länge von 250 mm durchgeführt. Die Testlösung umfasste 95 Gew.-% IPA und 5 Gew.-% Wasser. Die Untersuchungen wurden bei 70 °C durchgeführt. Die Membrane zeigte eine sehr hohe Wasserdurchlässigkeit, während gleichzeitig die Diffusion für das größere IPA-Molekül blockiert wurde. Das Ergebnis in Form des Separationsfaktor, bzw. des Gasflusses ist deutlich besser als bei bislang bekannten Membranen. In einer repräsentativen Untersuchung wurden Trennfaktoren von mehr als 800 in Kombination mit einem Gasfluss von 5 kg/m$^2$h bei einer Temperatur von 70 °C gemessen. In einem Entwässerungstest bei ebenfalls 70 °C konnte die komplette Entwässerung der 5 Gew.-% Wasser enthaltenden IPA-Lösung nach 3 Stunden erzielt werden.

Ausführungsbeispiel 2:

Es wurde zunächst eine gradierte Membran mit einer Graphitoxid-Deckschicht gemäß des Ausführungsbeispiels 1 hergestellt. Diese wurde einer thermischen Behandlung in einem herkömmlichen Ofen in Luft bei 300 °C für 1 Stunde unterzogen. Im Anschluss wurde die Membrane bei 750 °C in einer Mischung aus 3 % H$_2$ und 97 % Ar einer weiteren thermischen Behandlung ausgesetzt, die zu einer Reduzierung der Deckschicht in eine Graphitschicht führt. Diese Reduzierung fand in einem besonders daran angepassten Ofen statt, bei dem zunächst ein Vakuum von ca. 10$^{-4}$ mbar (0,01 Pa) angelegt wurde und anschließend die Mischung aus H$_2$ und Ar zugegeben wurde.

Die extrem dünne Graphit-Deckschicht zeigte nach der Reduktion weder makroskopisch noch im Rasterelektronenmikroskop (SEM) Risse oder andere Defekte.

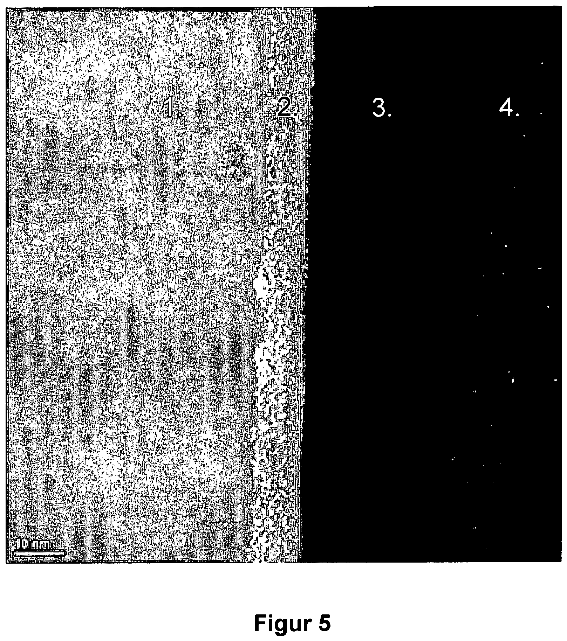

Die Dicke der Deckschicht, sowie die Anzahl gestapelter Graphenlagen, wurden mittels Transmissionselektronenmikroskopie (TEM) untersucht. In der Figur 5 ist ein hochaufgelöstes TEM-Bild dargestellt. Auf dem TEM-Bild ist auf der obersten 8YSZ-Zwischenschicht (1) eine ca. 10 nm dicke Graphit-Deckschicht (2) zu erkennen. In der Aufnahme sind neben den Membranschichten eine Goldbeschichtung (3) und eine Platinbeschichtung (4) zu erkennen, welche während der Probenpräparation auf die eigentliche Membranprobe aufgedampft wurden. Die Analyse der hochaufgelösten TEM Bilder zeigt, das die Deckschicht ungefähr 20 übereinander gestapelte Graphenlagen umfasst.

Anschließend wurde der Abstand zwischen den einzelnen Graphenlagen mit TED (Transmission Electron Diffraction) analysiert. Die Analysen zeigten einen Zwischenlagenabstand im Bereich von 0,3 nm bis 0,4 nm. Diese Werte streuen um 0,35 nm, was dem Abstand zwischen den einzelnen Graphenlagen in Graphit (0,335 nm) entspricht.

In einigen ausgewählten Durchflussuntersuchungen wurde die Selektivität dieser Membranen gemäß des ersten und des zweiten Ausführungsbeispiels für kleinere Gase untersucht. Die Tests wurden bei Temperaturen zwischen 50 und 200 °C und mit unterschiedlichen Gasen, z. B. He, H$_2$, CO$_2$ oder N$_2$ durchgeführt.

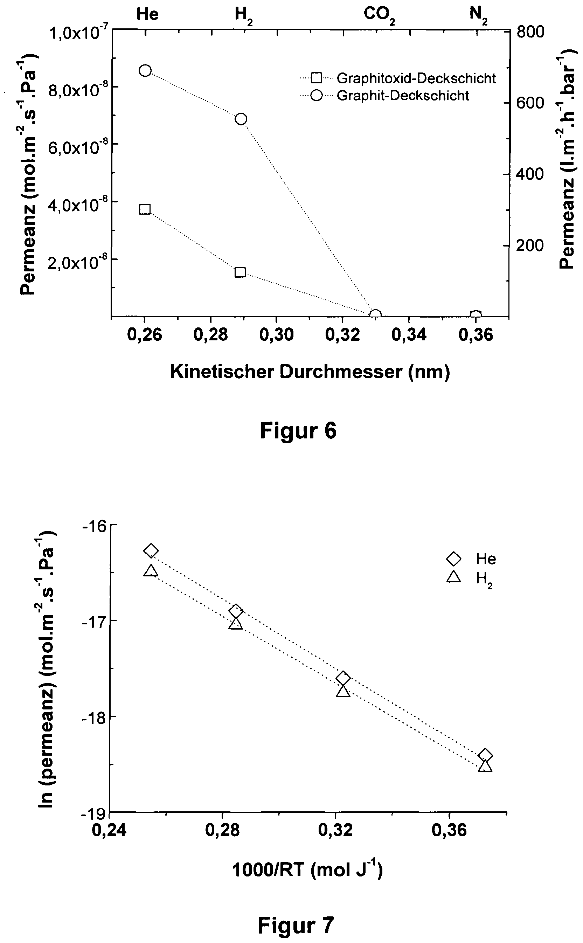

In der Figur 6 ist die Permeanz für einige Gase bei 200 °C (473 K) und bei einem Druck von 4 bar (4*10$^5$ Pa) für die beiden Membranen (Graphitoxid-, Graphitdeckschicht) dargestellt. Für beide Membranen ergeben sich gute Werte für die He- und H$_2$-Permeanz während CO$_2$ und N$_2$ nicht oder kaum permeieren. Beide Deckschichten, sowohl die Graphitoxiddeckschicht, als auch die auf Graphit basierte Deckschicht zeigen dadurch eine exzellente Selektivität für die folgenden Gaspaare:

| He/N$_2$: | Selektivität Graphitoxid-Deckschicht > 100, | Graphit-Deckschicht > 100, |
| H$_2$/N$_2$: | Selektivität Graphitoxid-Deckschicht > 50, | Graphit-Deckschicht > 150, |
| H$_2$/CO$_2$: | Selektivität Graphitoxid-Deckschicht > 50, | Graphit-Deckschicht > 80. |

Als kinetischen Durchmesser der entsprechenden Gase werden in der Literatur 0.26 nm für He, 0.289 nm für H$_2$, 0.33 für CO$_2$ und 0.364 nm für N$_2$ angegeben. Da die Membrane für CO$_2$ nicht mehr durchlässig sind, kann angenommen werden, dass die Schichtabstände der einzelnen Lagen der Graphitoxid- und der Graphitdeckschicht zwischen 0,289 und 0,33 nm liegen. Diese Werte sind vergleichbar mit den Zwischenschichtabständen einzelner Graphenlagen (0,335 nm) in Graphit. Daraus kann geschlossen werden, dass bei den beiden Membranen eine Graphitähnliche Struktur als Deckschicht vorliegt.

Es konnte zudem gezeigt werden, dass die gemessenen Permeanze für He und H$_2$ für die Membrane mit einer Graphit-Deckschicht 2 bis 3 Mal größer ausfallen. Dieser Effekt kann mit der Entfernung der sauerstoffhaltigen Gruppen bei der Umwandlung von Graphitoxid in Graphit erklärt werden, die andernfalls den Transport der Gasmoleküle behindern. Die hier entwickelten erfindungsgemäßen Membranen mit einem makroporösen keramischen Träger, einer daran angepassten mesoporösen 8YSZ-aufweisenden Zwischenschicht und einer thermisch behandelten Deckschicht zeigen deutlich verbesserte Eigenschaften gegenüber den bislang bekannten Graphenoxid-Membranen. Die hier vorgestellten Membranen können ähnlich wie die bislang bekannten Graphenoxid-Membranen im unteren Temperaturbereich unterhalb von 150 °C eingesetzt werden. Die erfindungsgemäßen Graphitoxidmembranen können darüber hinaus aber auch bei höheren Temperaturen bis zu 400 °C und die erfindungsgemäßen Graphitmembranen sogar bis zu 900 °C verwendet werden, wobei gerade der Hochtemperaturbereich vorteilhafter ist, da die Permeanz von He und H$_2$ mit steigender Betriebstemperatur exponentiell ansteigt.

Ausführungsbeispiel 3:

In der Figur 7 ist die Temperaturanhängigkeit der He- und H$_2$-Permeanz der auf Graphit basierten Membrane gemäß des Ausführungsbeispiels 2 dargestellt. Die Permeation wurde im Temperaturbereich zwischen 50 und 200 °C gemessen. Sowohl die He- als auch die H$_2$-Permeanz steigen exponentiell mit der Temperatur an und gehorchen damit der Arrheniusgleichung. Aus der Geradensteigung lässt sich die Aktivierungsenergie $E_{act}$ bestimmen. Der experimentell bestimmte Wert für $E_{act}$ ergab sich im Mittel zu 18 kJ mol$^{-1}$ für He und zu 17,3 kJ mol$^{-1}$ für H$_2$. Beide Aktivierungsenergien liegen deutlich oberhalb der für hochqualitative Membranen allgemein anerkannte Wert von 10 kJ mol$^{-1}$ und bestätigen die erfolgreiche Herstellung von hochqualitative mikroporösen Gasseparationsmembranen mit thermisch aktiviertem Transportmechanismus.

Ausführungsbeispiel 4:

Ein weiteres alternatives Herstellungsverfahren für eine erfindungsgemäße Membrane startet mit einer kolloidalen Dispersion von reduzierten Graphenteilchen. Vor der Abscheidung der Deckschicht, können Graphenoxidteilchen regelmäßig zu Graphenteilchen reduziert werden. Eine solche Reduktion kann über alle bislang bekannten Verfahren erzielt werden, beispielsweise über chemische Methoden, oder mittels Mikrowelle.

Alternativ kann die kolloidale Dispersion umfassend reduzierte Graphenteilchen auch direkt aus Graphenteilchen generiert werden. Da die Graphenteilchen jedoch hydrophob sind, wird eine solche Dispersion in der Regel mit einem organischen Lösungsmittel erhalten.

Ausgehend von einer mesoporösen 8YSZ-Zwischenschicht kann die Beschichtung über die an anderer Stelle bereits beschriebene Tauchbeschichtung aufgebracht werden. Als Ergebnis erhält man dann als Deckschicht eine Struktur aus gestapelten Graphenlagen. Dieser Deckschicht kann anschließend im Vakuum, unter Inertgas oder reduzierenden Bedingungen (z. B. Ar/H$_2$ Gemisch) bei Temperaturen bis 1000 °C thermisch behandelt werden.

Ausführungsbeispiel 5:

In einer weiteren Ausgestaltung der Erfindung wird als Ausgangsmaterial eine dotierte kolloidale Dispersion aus Graphenoxidteilchen eingesetzt. Vor der Abscheidung der Deckschicht, wird die Dispersion mit einem Dotierstoff, wie beispielsweise Ca$^{2+}$ oder Mg$^{2+}$ versetzt. Die Aufbringung der Deckschicht und die thermische Behandlung erfolgen analog zum Ausführungsbeispiel 1. Als Ergebnis erhält man dann als Deckschicht eine Struktur aus gestapelten Graphenoxidlagen mit Dotierstoffen, die überwiegend in den Zwischenräumen zwischen den Lagen angeordnet sind. Falls ein herkömmliches Vernetzungsmittel als Dotierstoff eingesetzt wird, können die einzelnen Lagen auf diese Weise verbunden werden. Diese Deckschicht kann anschließend reduziert werden, wie beschrieben in Ausführungsbeispiel 2, wobei eine Struktur mit vernetzten Graphenlagen erhalten wird.

Ausführungsbeispiel 6:

Graphitoxid ist aufgrund des großen Anteils an $sp^3$-Kohlenstoffatomen mit sauerstoffhaltigen Gruppen bekanntermaßen ein relativ schlechter elektrischer Leiter. Es ist aber bekannt, dass durch das Entfernen solcher sauerstoffhaltigen Gruppen aus den Graphenoxidlagen und durch die Bildung $sp^2$-Kohlenstoffatomen dieses bis hin zu einem Graphit-ähnliches Material umgewandelt werden kann. Daher ist die Messung der Leitfähigkeit der Deckschicht nach einer thermischen Behandlung ein geeignetes Mittel, um die Ausbildung eines Graphit-ähnlichen Materials zu belegen.

Auf einer gradierten, mesoporösen 8YSZ-Zwischenschicht wurde daher eine Graphitoxid-Deckschicht gemäß des Ausführungsbeispiels 1 aufgebracht. Analog zum Ausführungsbeispiel 2 wurde diese mit Hilfe einer thermischen Behandlung in eine extrem dünne Graphit-Deckschicht überführt. In einer Wasserfreiern Atmosphäre (< 1 ppm $H_2O$) wurde die Leitfähigkeit der Deckschicht bei ca. 25 °C ermittelt, um einen Beitrag durch adsorbiertes Wasser auszuschließen. Nach der thermischen Behandlung in Luft bei 300 °C zeigte die Deckschicht das Verhalten eines Halbleiters mit einer elektrischen Leitfähigkeit von ca. 300 S/m. Nach der thermischen Behandlung bei 750 °C in einer Mischung aus 3 % $H_2$ und 97 % Ar zeigte die Deckschicht einer elektrischen Leitfähigkeit von ca. 15000 S/m. Ein solcher Wert kann mit graphitischem Vollmaterial verglichen werden und weist daher auf die Ausbildung einer graphitischen Deckschicht hin.

Die erfindungsgemäßen Membranen zeigen zusammenfassend insbesondere die nachfolgend aufgeführten Vorteile auf:

a) Die Membranvorrichtung ist bei Temperaturen zwischen 25 und 800 °C thermisch stabil.
b) Die Membranvorrichtung ist geeignet, wie ein Molsieb, He und $H_2$ von anderen größeren Molekülen abzutrennen.
c) Die Gasdurchlässigkeit der Membranvorrichtung kann durch eine Variation der thermischen Behandlung während der Herstellung verändert werden.
d) Die hydrophile/hydrophobe Eigenschaften der Membranvorrichtung können durch eine Variation der thermischen Behandlung während der Herstellung verändert werden.
e) Die hydrophile Membranvorrichtung ist geeignet, $H_2O$ von anderen Lösungsmitteln abzutrennen.
f) Bei der Membranvorrichtung kann der Abstand der einzelnen Graphenoxidschichten der Deckschicht durch eine Variation der Feuchtigkeit verändert werden.
g) Bei der Membranvorrichtung kann der Abstand der einzelnen Graphenoxidschichten der Deckschicht zusätzlich oder alternativ durch Einsatz eines Vernetzungsmittels als Dotierstoff verändert werden.
h) Die Membranvorrichtung umfasst eine mikroporöse Deckschicht, die nach einer Wärmebehandlung bei 750 °C in Ar/3%$H_2$, ausreichend elektrisch leitfähig ist, und insbesondere eine elektrische Leitfähigkeit von wenigstens 15000 S/m aufweist.
i) Die erfindungsgemäße Membranvorrichtung ist vorteilhaft in der Lage kleine Gasmoleküle wie He, $H_2$, $CO_2$, $N_2$ oder Wasser untereinander und/oder auch von anderen größeren Molekülen in fester, flüssiger oder gasförmiger Form abzutrennen.

**Patentansprüche**

1. Verfahren zur Herstellung einer Membranvorrichtung,
   bei dem auf einer makroporösen, keramischen Trägerschicht (1) mit Poren mit einem Porendurchmesser von > 50 nm,
   wenigstens eine mesoporöse Zwischenschicht (2) mit Poren mit einem mittleren Porendurchmesser von 2 nm bis 50 nm,
   und auf dieser eine mikroporöse Deckschicht (3) mit einem mittleren Porendurchmesser < 0,5 nm aufgebracht wird,
   ***dadurch gekennzeichnet,***
   **dass** eine mikroporöse Deckschicht (3) umfassend 5 bis 1000 Lagen Graphenoxid, mittels einer kolloidalen Dispersion mit Hilfe der Tauchbeschichtung aufgebracht und anschließend bei Temperaturen bis 200 °C getrocknet wird.

2. Verfahren nach vorhergehendem Anspruch 1, bei dem eine kolloidale Dispersion, umfassend Graphenoxidteilchen mit Teilchengrößen zwischen 10 nm und 5 $\mu$m, eingesetzt wird.

3. Verfahren nach einem der Ansprüche 1 bis 2, bei dem eine verdünnte kolloidale Dispersion mit einem Feststoffgehalt an Graphenoxidteilchen zwischen 20 mg und 2 g pro Liter kolloidale Dispersion eingesetzt wird.

4. Verfahren nach einem der Ansprüche 1 bis 3, bei dem auf die makroporöse, keramische Trägerschicht wenigstens eine mesoporöse Zwischenschicht, umfassend Yttriumstabilisiertes Zirkoniumdioxid, aufgebracht wird.

5. Verfahren nach einem der Ansprüche 1 bis 4, bei dem nach dem Trocknungsschritt eine thermische Behandlung bei Temperaturen zwischen 200 und 1000 °C erfolgt.

6. Verfahren nach einem der Ansprüche 1 bis 5, bei dem eine mikroporöse Deckschicht, zumindest teilweise Graphen umfassend, hergestellt wird.

7. Verfahren nach einem der Ansprüche 1 bis 6, bei dem die thermische Behandlung der mikroporösen Deckschicht unter reduzierender Atmosphäre oder unter Inertgas oder unter Vakuum erfolgt, und wobei das Graphenoxid der Deckschicht zumindest teilweise zu Graphen reduziert wird.

8. Verfahren nach einem der Ansprüche 1 bis 7, bei dem nach dem Trocknungsschritt oder nach der thermischen Behandlung eine chemische Reduktion der Deckschicht bei Temperaturen bis zu 200 °C erfolgt, wobei das Graphenoxid der Deckschicht zumindest teilweise zu Graphen reduziert wird.

9. Mehrschichtige Membranvorrichtung, herstellbar nach einem der Ansprüche 1 bis 9, umfassend

- wenigstens eine makroporöse, keramische Trägerschicht (1) mit Poren mit einem Porendurchmesser von > 50 nm,
- wenigstens eine darauf angeordnete mesoporöse Zwischenschicht (2) mit Poren mit einem mittleren Porendurchmesser von 2 nm bis 50 nm,
- und wenigstens eine auf der mesoporösen Zwischenschicht (2) angeordnete mikroporöse Deckschicht (3) mit Poren mit einem mittleren Porendurchmesser < 0,5 nm,

*dadurch gekennzeichnet,*

- **dass** die mikroporöse Deckschicht (3) Graphitoxid, teilweise reduziertes Graphitoxid oder Graphit aufweist, und
- **dass** die mikroporöse Deckschicht (3) einen thermisch aktivierten Gastransport ermöglicht und Molekularsiebeigenschaften aufweist, d.h. die Permeanz ist höher für Helium gegenüber Wasserstoff, gemessen bei 200°C und 4 bar in Tests für die unterschiedlichen Gase.

10. Membranvorrichtung nach Anspruch 9 mit wenigstens zwei mesoporösen Zwischenschichten, bei denen in Richtung der Deckschicht sowohl die Teilchengröße, die Rauheit als auch die Porengröße abnimmt.

11. Membranvorrichtung nach Anspruch 9 oder 10, mit wenigstens zwei mesoporösen Zwischenschichten, von denen eine erste mesoporöse Zwischenschicht in Kontakt mit der makroporösen Trägerschicht und eine zweite mesoporöse Zwischenschicht in Kontakt mit der mikroporösen Deckschicht steht, und wobei wenigstens eine Zwischenschicht Poren mit einem mittleren Porendurchmesser kleiner als 5 nm aufweist.

12. Membranvorrichtung nach vorhergehendem Anspruch 11, mit einer makroporösen Trägerschicht umfassend $\alpha$-$Al_2O_3$, $TiO_2$, $ZrO_2$, YSZ, $SiO_2$, $CeO_2$, MgO, $Y_2O_3$, $Gd_2O_3$, Mullit, Cordierit, Zeolith, $BaTiO_3$, metallische Komponenten, Karbon, SiC, $Si_3N_4$, SiOC, SiCN, AIN oder eine Mischung aus den vorgenannten Materialien.

13. Membranvorrichtung nach einem der Ansprüche 9 bis 12 mit wenigstens einer keramischen mesoporösen Zwischenschicht, insbesondere einer keramischen mesoporösen Zwischenschicht umfassend $\gamma$-$Al_2O_3$, $TiO_2$, $ZrO_2$, YSZ, $SiO_2$, $CeO_2$, MgO, $Y_2O_3$, $Gd_2O_3$, ZnO, $SnO_2$, Mullit, Cordierit, Zeolith, Metal-Organic Framework materials (MOF), Ton, $BaTiO_3$, Karbon, SiC, $Si_3N_4$, AIN, SiOC, SiCN, AIN oder Mischungen aus den vorgenannten Materialien.

14. Membranvorrichtung nach einem der Ansprüche 11 bis 13 bei dem die erste mesoporöse Zwischenschicht eine Schichtdicke zwischen 1 $\mu$m und 20 $\mu$m und/oder die zweite mesoporöse Zwischenschicht eine Schichtdicke zwischen 0,1 $\mu$m und 2 $\mu$m aufweist.

15. Membranvorrichtung nach einem der Ansprüche 9 bis 14, bei dem die mikroporöse Deckschicht eine Schichtdicke zwischen 3 nm und 2 $\mu$m, vorteilhaft zwischen 5 nm und 300 nm aufweist.

16. Membranvorrichtung nach einem der Ansprüche 9 bis 15, bei dem die mikroporöse Deckschicht zwischen 5 und 1000 Lagen an Graphenoxid, teilweise reduziertes Graphenoxid oder Graphen aufweist.

17. Membranvorrichtung nach Anspruch 9 bis 16, bei dem die mikroporöse Deckschicht nach einer Wärmebehandlung bei 750 °C in Ar/3% $H_2$, eine elektrische Leitfähigkeit, gemessen in wasserfreier Atmosphäre bei 25° C, von wenigstens 15000 S/m aufweist.

**Claims**

1. Method for producing a membrane device,
   in which at least one mesoporous intermediate layer (2) with pores with an average pore diameter of 2 nm to 50 nm, and on it a microporous covering layer (3) with an average pore diameter of < 0.5 nm, are applied to a macroporous, ceramic carrier layer (1) with pores with a pore diameter of > 50 nm,
   ***characterised in that***
   a microporous covering layer (3) comprising 5 to 1000 layers of graphene oxide is applied by means of a colloidal dispersion using dip coating and then dried at temperatures of up to 200° C.

2. Method according to previous claim 1, in which a colloidal dispersion, comprising graphene oxide particles with particle sizes of between 10 nm and 5 $\mu$m, is used.

3. Method according to one of claims 1 to 2, in which a diluted colloidal dispersion with a solid content of graphene oxide particles of between 20 mg and 2 g per litre of colloidal dispersion is used.

4. Method according to one of claims 1 to 3, in which at least one mesoporous intermediate layer, comprising yttrium-stabilised zirconium dioxide, is applied to the macroporous, ceramic carrier layer.

5. Method according to one of claims 1 to 4, in which thermal treatment at temperatures of between 200 and 1000° C is carried out after the drying step.

6. Method according to one of claims 1 to 5, in which a microporous covering layer, at least partly comprising graphene, is produced.

7. Method according to one of claims 1 to 6, in which thermal treatment of the microporous covering layer is carried out under a reducing atmosphere or under inert gas or under a vacuum, and in which the graphene oxide of the covering layer is at least partly reduced to graphene.

8. Method according to one of claims 1 to 7, in which chemical reduction of the covering layer at temperatures of up to 200° C is carried out after the drying step or after thermal treatment, in which the graphene oxide of the covering layer is at least partly reduced to graphene.

9. Multilayer membrane device that may be produced according to one of claims 1 to 9, comprising

   - at least one macroporous, ceramic carrier layer (1) with pores with a pore diameter of > 50 nm,
   - at least one mesoporous intermediate layer (2) with pores with an average pore diameter of 2 nm to 50 nm arranged on it,
   - and at least one microporous covering layer (3) with pores with an average pore diameter of < 0.5 nm arranged on the mesoporous intermediate layer (2), ***characterised in that***
   - the microporous covering layer (3) has graphite oxide, partly reduced graphite oxide or graphite, and
   - the microporous covering layer (3) makes thermally activated gas transport possible and has molecular sieve properties, i.e. the permeance is higher for helium compared with hydrogen, measured at 200° C and 4 bar in tests for the different gases.

10. Membrane device according to claim 9 with at least two mesoporous intermediate layers, in which both the particle size and roughness as well as the pore size decrease in the direction of the covering layer.

11. Membrane device according to claim 9 or 10, with at least two mesoporous intermediate layers, of which a first mesoporous intermediate layer is in contact with the macroporous carrier layer and a second mesoporous intermediate layer is in contact with the microporous covering layer, and in which at least one intermediate layer has pores with an average pore diameter of less than 5 nm.

12. Membrane device according to previous claim 11, with a macroporous carrier layer comprising $\alpha$-$Al_2O_3$, $TiO_2$, $ZrO_2$, YSZ, $SiO_2$, $CeO_2$, MgO, $Y_2O_3$, $Gd_2O_3$, mullite, cordierite, zeolite, $BaTiO_3$, metallic components, carbon, SiC, $Si_3N_4$, SiOC, SiCN, AlN or a mixture of the above materials.

13. Membrane device according to one of claims 9 to 12 with at least one ceramic mesoporous intermediate layer, particularly a ceramic mesoporous intermediate layer comprising $\gamma$-$Al_2O_3$, $TiO_2$, $ZrO_2$, YSZ, $SiO_2$, $CeO_2$, MgO, $Y_2O_3$, $Gd_2O_3$, ZnO, $SnO_2$, mullite, cordierite, zeolite, Metal Organic Framework materials (MOF), clay, $BaTiO_3$, carbon, SiC, $Si_3N_4$, AlN, SiOC, SiCN, AlN or mixtures of the above materials.

14. Membrane device according to one of claims 11 to 13, in which the first mesoporous intermediate layer has a layer thickness of between 1 $\mu$m and 20 $\mu$m and/or the second mesoporous intermediate layer has a layer thickness of between 0.1 $\mu$m and 2 $\mu$m.

15. Membrane device according to one of claims 9 to 14, in which the microporous covering layer has a layer thickness of between 3 nm and 2 $\mu$m, advantageously between 5 nm and 300 nm.

16. Membrane device according to one of claims 9 to 15, in which the microporous covering layer has between 5 and 1000 layers of graphene oxide, partly reduced graphene oxide or graphene.

17. Membrane device according to claim 9 to 16, in which the microporous covering layer has an electrical conductivity of at least 15000 S/m, measured in an anhydrous atmosphere at 25° C, after thermal treatment at 750° C in Ar/3% $H_2$.

## Revendications

1. Procédé de production d'un système à membrane,
   dans lequel on dépose, sur une couche (1) support macroporeuse en céramique, ayant des pores d'un diamètre > 50 nm,
   au moins une couche (2) intermédiaire mésoporeuse, ayant des pores d'un diamètre moyen de 2 nm à 50 nm,
   et sur celle-ci, une couche (3) microporeuse de finition, ayant un diamètre moyen de pore < 0,5 nm,
   **caractérisé**
   **en ce que** l'on dépose, à l'aide d'une enduction au trempé au moyen d'une dispersion colloïdale, une couche (3) microporeuse de finition, comprenant de 5 à 1000 strates d'oxyde de graphène, et ensuite, on la sèche à des températures allant jusqu'à 200°C.

2. Procédé suivant la revendication 1 précédente, dans lequel on utilise une dispersion colloïdale, comprenant des particules d'oxyde de graphène ayant des dimensions de particule comprises entre 10 nm et 5pm.

3. Procédé suivant l'une des revendications 1 à 2, dans lequel on utilise une dispersion colloïdale diluée, ayant une teneur en matière solide de particules d'oxyde de graphène comprise entre 20 mg et 2 g par litre de dispersion colloïdale.

4. Procédé suivant l'une des revendications 1 à 3, dans lequel on dépose, sur la couche support macroporeuse en céramique, au moins une couche intermédiaire mésoporeuse, comprenant du dioxyde de zirconium stabilisé par de l'yttrium.

5. Procédé suivant l'une des revendications 1 à 4, dans lequel, après le stade de séchage, on effectue un traitement thermique à des températures comprises entre 200 et 1000°C.

6. Procédé suivant l'une des revendications 1 à 5, dans lequel on produit une couche microporeuse de finition, comprenant, au moins en partie, du graphène.

7. Procédé suivant l'une des revendications 1 à 6, dans lequel on effectue le traitement thermique de la couche microporeuse de finition sous atmosphère réductrice ou sous gaz inerte ou sous vide, l'oxyde de graphène de la couche de finition étant réduit, au moins en partie, en graphène.

**8.** Procédé suivant l'une des revendications 1 à 7, dans lequel, après le stade de séchage ou après le traitement thermique, on effectue une réduction chimique de la couche de finition à des températures allant jusqu'à 200°C, l'oxyde de graphène de la couche de finition étant réduit, au moins en partie, en graphène.

**9.** Système à membrane stratifié, pouvant être produit suivant l'une des revendications 1 à 9, comprenant

- au moins une couche (1) support macroporeuse en céramique, ayant des pores d'un diamètre > 50 nm,
- au moins une couche (2) intermédiaire mésoporeuse mise dessus, ayant des pores d'un diamètre moyen de 2 nm à 51 nm,
- et, mise sur la couche (2) intermédiaire mésoporeuse, au moins une couche (3) de finition microporeuse, ayant des pores d'un diamètre moyen < 0,5 nm, **caractérisé**
- **en ce que** la couche (3) microporeuse de finition a de l'oxyde de graphite, de l'oxyde de graphite en partie réduit ou du graphite et
- **en ce que** la couche (3) microporeuse de finition rend possible un transport de gaz activé thermiquement et a des propriétés de tamis moléculaire, c'est-à-dire que la perméance est plus grande pour l'hélium que pour l'hydrogène, mesurée à 200°C et sous 4 bar, dans des essais pour les gaz différents.

**10.** Système à membrane suivant la revendication 9, comprenant au moins deux couches intermédiaires mésoporeuses, dans lesquelles, tant la dimension de particule, la rugosité qu'également la dimension de pore diminuent dans la direction de la couche de finition.

**11.** Système à membrane suivant la revendication 9 ou 10, comprenant au moins deux couches intermédiaires mésoporeuses, dont une première couche intermédiaire mésoporeuse est en contact avec la couche support macroporeuse et une deuxième couche intermédiaire mésoporeuse est en contact avec la couche microporeuse de finition, et dans lequel au moins une couche intermédiaire a des pores ayant un diamètre moyen plus petit que 5 nm.

**12.** Système à membrane suivant la revendication précédente 11, ayant une couche de support macroporeuse com-prenant de l'$Al_2O_3$-$\alpha$, du $TiO_2$, du $ZrO_2$, de l'YSZ, du $SiO_2$, du $CeO_2$, du MgO, de l'$Y_2O_3$, du $Gd_2O_3$, de la mullite, de la cordiérite, un zéolithe, du $BaTiO_3$, des constituants métalliques, du carbone, du SiC, du $Si_3N_4$, du SiOC, du SiCN, de l'AlN ou un mélange des matériaux mentionnés ci-dessus.

**13.** Système à membrane suivant l'une des revendications 9 à 12, ayant au moins une couche intermédiaire mésoporeuse en céramique, notamment une couche intermédiaire mésoporeuse en céramique comprenant de l'$Al_2O_3$-$\gamma$, du $TiO_2$, du $ZrO_2$, de l'YSZ, du $SiO_2$, du $CeO_2$, du MgO, de l'$Y_2O_3$, du $Gd_2O_3$, du ZnO, du $SnO_2$, de la mullite, de la cordiérite, un zéolithe, des matériaux métal-framework organique (MOF), de l'argile, du $BaTiO_3$, du carbone, du SiC, du $Si_3N_4$, de l'AlN, du SiOC, du SiCN, de l'AlN ou des mélanges des matériaux mentionnés ci-dessus.

**14.** Système à membrane suivant l'une des revendications 11 à 13, dans lequel la première couche intermédiaire mésoporeuse a une épaisseur comprise entre 1 $\mu$m et 20 $\mu$m et/ou la deuxième couche intermédiaire mésoporeuse a une épaisseur comprise entre 0,1 $\mu$m et 2 $\mu$m.

**15.** Système à membrane suivant l'une des revendications 9 à 14, dans lequel la couche microporeuse de finition a une épaisseur comprise entre 3 nm et 2 $\mu$m, avantageusement comprise entre 5 nm et 300 nm.

**16.** Système à membrane suivant l'une des revendications 9 à 15, dans lequel la couche microporeuse de finition a entre 5 et 1000 strates d'oxyde de graphène, d'oxyde de graphène réduit en partie ou de graphène.

**17.** Système à membrane suivant la revendication 9 à 16, dans lequel la couche microporeuse de finition a, après un traitement thermique à 750°C dans Ar/$H_2$ à 3%, une conductivité électrique, mesurée dans une atmosphère exempte d'eau à 25°C, d'au moins 15000 S/m.

3

2

1

**Figur 1**

1

Beschichtung mit einer
wässrigen Mischung aus
Nanoteilchen und Binder

Kalzinieren

2

1

**Figur 2a**

2

1

Beschichtung mit einer
wässrigen Dispersion
mit Graphenoxidteilchen

therm. Behandlung

3

2

1

**Figur 2b**

**Figur 3**

**Figur 4**

**Figur 5**

**Figur 6**

**Figur 7**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 201400454 A1
- US 20110148248 A1

- WO 20091179778 A1
- US 20140230653 A1

**In der Beschreibung aufgeführte Nicht-Patentliteratur**

- **H. HUANG et al.** Facile one-step forming of NiO and yttrium-stabilized zirconia composite anodes with straight open pores for planar solid oxide fuel cell using phaseinversion tape casting method. *Journal of Power Sources,* 2015, vol. 274, 1114-1117